# EUROPÄISCHE PATENTSCHRIFT

(11) **EP 2 398 569 B1**
(45) Veröffentlichungstag und Bekanntmachung des Hinweises auf die Patenterteilung: **25.12.2013**
(21) Anmeldenummer: 10704553.6
(22) Anmeldetag: 15.02.2010
(51) Int. Cl.: B01D 9/00, F16C 17/04

(54) **VERFAHREN ZUM REINIGENDEN ABTRENNEN EINER CHEMISCHEN ZIELVERBINDUNG AUS EINER SUSPENSION IHRER KRISTALLE IN MUTTERLAUGE**
METHOD FOR PURIFYING AND SEPARATING A CHEMICAL TARGET COMPOUND IN A SUSPENSION OF THEIR CRYSTALS IN THE MOTHER LIQUOR
PROCÉDÉ DE SÉPARATION ET PURIFICATION D'UN COMPOSÉ CHIMIQUE CIBLE CONTENU DANS UNE SUSPENSION DE SES CRISTAUX DANS LA LIQUEUR MÈRE

(30) Priorität: 18.02.2009 DE 102009000987; 18.02.2009 US 153339 P
(43) Veröffentlichungstag der Anmeldung: 28.12.2011
(73) Patentinhaber: BASF SE, 67056 Ludwigshafen (DE)
(72) Erfinder: HEILEK, Jörg, 69245 Bammental (DE); SCHNEIDER,Wolfgang, 67098 Bad Dürkheim (DE); GUNKEL, Wolfgang, 68305 Mannheim (DE); SCHLIEPHAKE, Volker, 67105 Schifferstadt (DE); MÜLLER-ENGEL, Klaus Joachim, 76297 Stutensee (DE)
(86) Internationale Anmeldenummer: PCT/EP2010/051828
(87) Internationale Veröffentlichungsnummer: WO 2010/094637

(56) Entgegenhaltungen:
- EP-A1- 0 373 720
- EP-B1- 1 448 282
- US-A- 4 787 985

## Beschreibung

Vorliegende Erfindung betrifft ein Verfahren zum reinigenden Abtrennen einer chemischen Zielverbindung aus einer Suspension ihrer Kristalle in Mutterlauge, mit einer Waschvorrichtung, die als wenigstens ein Element eine aus verschiedenen Bauteilen bestehende Waschkolonne umfasst, die als ein erstes Bauteil eine ortsfest fixierte Wand aufweist, die einen zu seiner Längsachse rotationssymmetrischen Prozessraum und einen sich an diesen anschließenden Kristallschmelzeraum umhüllt, wobei der Einschlusswinkel α zwischen der Raumrichtung der Symmetrieachse und der Vertikalen nicht mehr als 20° beträgt und der Prozessraum durch die Wand der Waschkolonne und zwei auf der Symmetrieachse einander gegenüberliegende Enden begrenzt wird, von denen das auf der Symmetrieachse höher gelegene Ende das Zufuhr-Ende und das auf der Symmetrieachse tiefer gelegene Ende das Abtrag-Ende bildet, bei dem
- am Zufuhr-Ende ein Strom der Suspension in den Prozessraum geführt wird,
- unter Zurückhaltung der Kristalle und unter Ausbildung eines Kristallbetts im Prozessraum aus dem in den Prozessraum geführten Suspensionsstrom ein Mutterlaugestrom aus dem Prozessraum abgegeben wird,
- als weiteres Bauteil der Waschkolonne in derselben am Abtrag-Ende des Prozessraums eine Abtrageinrichtung rotiert,
- das Kristallbett im Prozessraum mit wenigstens einer von der Gravitation verschiedenen Kraft und parallel zur Symmetrieachse des Prozessraums auf die rotierende Abtrageinrichtung zu gefördert wird und dabei auf die Abtrageinrichtung stößt,
- die rotierende Abtrageinrichtung vom auf sie stoßenden Kristallbett Kristalle abträgt,
- der Strom der abgetragenen Kristalle durch die rotierende Abtrageinrichtung hindurch und/oder an der rotierenden Abtrageinrichtung vorbei in den sich in Förderrichtung des Kristallbetts hinter der Abtrageinrichtung an den Prozessraum anschließenden Kristallschmelzeraum der Waschkolonne fließt,
- als weiteres Bauteil der Waschkolonne eine Antriebswelle, die von einem Antriebsaggregat zur Rotation um ihre Längsachse angetrieben wird, von unten durch einen in den Kristallschmelzeraum führenden Eingang hindurch in die Waschkolonne geführt ist, wobei der Einschlusswinkel β zwischen der Raumrichtung der Rotationsachse der Antriebswelle und der Raumrichtung der Symmetrieachse des Prozessraums bei keiner Projektion der beiden Raumrichtungen in eine Ebene mehr als 20° beträgt,
- die Abtrageinrichtung an der Antriebswelle befestigt ist und die rotierende Antriebswelle das für die Rotation der Abtrageinrichtung erforderliche Drehmoment auf diese überträgt,
- der in den Kristallschmelzeraum geförderte Kristallstrom im Kristallschmelzeraum und/oder in einem durch den Kristallschmelzeraum geführten Schmelzkreis durch Eintrag von Wärme zu einem Kristallschmelzestrom aufgeschmolzen wird,
- der Eingang für die Antriebswelle in den Kristallschmelzeraum mit einer Dichtung ausgerüstet ist, die dem nicht beabsichtigten Austritt von Kristallschmelze aus dem Kristallschmelzeraum durch den Eingang in diesen hindurch entgegenwirkt,
- bezogen auf die Stärke des vorgenannten Kristallschmelzestroms vom Kristallschmelzeraum ausgehend ein Teilstrom an Kristallschmelze als Waschschmelzestrom durch die rotierende Abtrageinrichtung hindurch und/oder an der rotierenden Abtrageinrichtung vorbei gegen die Bewegungsrichtung des Kristallbetts so in den Prozessraum geführt wird, dass sich im Kristallbett eine Waschfront ausbildet, die das -Kristallbett in eine Mutterlaugenzone und in eine Waschschmelzezone aufteilt, und der restliche Teilstrom als Reinschmelzestrom der chemischen Zielverbindung seinem Auslass zugeführt wird,
- die an der Antriebswelle in deren Längsrichtung im Normalbetrieb des Verfahrens angreifende Kraft stetig nach unten gerichtet ist,
- die Antriebswelle in mehr als einem Lager um ihre Längsachse drehbar gelagert ist,
- die Lagerung in einem der Lager so ausgeführt ist, dass die Lagerung in diesem Lager die an der Antriebswelle in deren Längsrichtung nach unten gerichtet angreifende Kraft aufnimmt, und
- die Lagerung in wenigstens zwei Lagern so ausgeführt ist, dass die Lagerung in jedem dieser zwei Lager die von der Antriebswelle im jeweiligen der zwei Lager radial nach außen wirkenden Kräfte aufnimmt.

Im Besonderen betrifft vorliegende Erfindung Verfahren zum reinigenden Abtrennen einer chemischen Zielverbindung aus einer Suspension ihrer Kristalle in Mutterlauge mit einer Waschvorrichtung, deren Waschkolonne eine hydraulische Waschkolonne ist, wie sie in den Schriften WO 2009/148314, WO 01/77056, WO 04/35514, WO 03/41833, WO 02/9839,

WO 03/41832, DE-A 100 36 881, WO 02/55469, WO 03/78378, DE-A 10 2005 018 702, WO 01/77056, Deutsche Anmeldung mit dem Aktenzeichen 102007032633.7 und EP-A 1 448 282 beschrieben ist. Dies vor allem dann, wenn es sich um ein Verfahren zum reinigenden Abtrennen von Acrylsäure aus einer Suspension von Acrylsäurekristallen in verunreinigter Acrylsäureschmelze handelt (d. h., wenn Acrylsäure die chemische Zielverbindung ist).

Acrylsäure, entweder für sich oder in Form ihrer Salze oder ihrer Ester, ist insbesondere zur Herstellung von Polymerisaten für die verschiedensten Anwendungsgebiete (z. B. Klebstoffe, Superabsorber, Bindemittel) von Bedeutung.

Die numerischen Adressen in dieser Schrift beziehen sich stets auf die dieser Schrift beiliegenden Figuren.

Der Begriff Mutterlauge soll in dieser Schrift so verstanden werden, dass er sowohl Schmelzen (auf die Zielverbindung entfällt in ihnen ein Gewichtsanteil von ≥ 50 Gew.%) aus der zu reinigenden chemischen Zielverbindung mit Verunreinigungen als auch Lösungen der zu reinigenden chemischen Zielverbindung sowie gegebenenfalls Verunreinigungen in Lösungsmitteln oder in Lösungsmittelgemischen (auf die Zielverbindung entfällt in ihnen ein Gewichtsanteil von < 50 Gew.-%) mit der Maßgabe umfasst, dass bei ihrer Abkühlung (d. h., bei der Abkühlung der Mutterlauge) die chemische Zielverbindung kristallisiert.

Das Verfahren gemäß der Präambel dieser Schrift ist aus der EP-A 1 448 282 bekannt. Es schließt sich in der Regel an ein Verfahren der Suspensionskristallisation an. Bei der Synthese einer chemischen Zielverbindung fällt diese üblicherweise nicht als Reinprodukt an, sondern ist in der Regel Teil eines Stoffgemischs, das neben der in hoher Reinheit erwünschten Zielverbindung noch unerwünschte Bestandteile wie Lösungsmittel, Ausgangsverbindungen und Nebenprodukte (z. B. Isomere) enthält.

Kühlt man ein solches Reaktionsproduktgemisch in seinem flüssigen Aggregatzustand befindlich ab, und bewirkt dabei die Ausbildung von Kristallen der erwünschten chemischen Zielverbindung, so ist die Suspensionskristallisation ein sehr wirksames und kostengünstiges Verfahren, um eine chemische Zielverbindung aus dem Reaktionsproduktgemisch in hoher Reinheit abzutrennen. Dabei macht man sich zunutze, dass beim Wachstum der aus der chemischen Zielverbindung entstehenden Kristalle in einer Flüssigkeit enthaltene, von der chemischen Zielverbindung verschiedene, Bestandteile in der Regel weitgehend aus dem Kristallgitter verdrängt werden und in der Mutterlauge zurückbleiben. Häufig erhält man bereits in einem einstufigen Kristallisationsprozess hochreine Kristalle der gewünschten chemischen Zielverbindung. Bei Bedarf kann die Suspensionskristallisation mehrstufig durchgeführt werden. Häufig wird man das bei der Synthese unmittelbar erhaltene Reaktionsproduktgemisch durch Anwendung von von der Kristallisation verschiedenen thermischen Trennverfahren (wie z. B. Rektifikation, Extraktion, Strippen, Destillation, Desorption und/oder Absorption) auch zunächst in ein anderes die chemische Zielverbindung enthaltendes Stoffgemisch überführen, auf das die Methode der Abtrennung der chemischen Zielverbindung durch Suspensionskristallisation dann erst oder besonders vorteilhaft anwendbar ist.

Das Verfahren der Suspensionskristallisation ist bekannt (vgl. z. B. DE-A 10 2007 043 758, DE-A 10 2007 043 748, DE-A 10 2007 004 960, DE-A 10 2007 043 759 und DE-A 10 2007 043 758 und die in diesen Schriften zitierte Literatur). Anwendungstechnisch zweckmäßig wird es mit Hilfe eines einen Sekundärraum und wenigstens einen Primärraum aufweisenden indirekten Wärmeübertragers (Kühlers bzw. Kristallisators) durchgeführt.

Durch die Übertragung von Wärme aus dem dem Sekundärraum zugeführten, die chemische Zielverbindung enthaltenden flüssigen Stoffgemisch durch die den Sekundärraum und den wenigstens einen Primärraum voneinander trennende materielle Trennwand (die Wärmeübertragungsfläche) hindurch in ein in dem wenigstens einen Primärraum fließendes Kühlmittel hinein, kühlt das flüssige Stoffgemisch ab, bis seine Sättigungsgrenze mit der chemischen Zielverbindung überschritten ist und das Stoffgemisch der Übersättigung durch Ausbildung (durch Ausscheidung) von aus der chemischen Zielverbindung aufgebautem Kristallisat entgegenwirkt.

Ist der gewünschte Kristallisationsgrad (der Begriff Kristallisationsgrad meint dabei den Massenbruch oder auch Massenanteil des in der resultierenden Suspension von Kristallen der chemischen Zielverbindung in verbliebener (flüssiger) Mutterlauge enthaltenen feinteiligen Kristallisats an der Gesamtmasse der Kristallsuspension) erreicht, wird die Kristallsuspension aus dem Sekundärraum herausgeführt. Durch Abtrennung der Kristalle von der Mutterlauge kann die erwünschte chemische Zielverbindung in hoher Reinheit gewonnen werden. Ein entscheidender Schritt, der die Reinheit der abgetrennten chemischen Zielverbindung maßgeblich beeinflusst, ist dabei das für die Abtrennung der Kristalle von der Mutterlauge, die die von der chemischen Zielverbindung verschiedenen Bestandteile in angereicherter Form sowie die noch nicht kristallisierten Anteile der chemischen Zielverbindung enthält, angewandte Trennverfahren. Dieser Trennprozess kann mehrstufig ablaufen, wobei zumindest in der letzten Stufe oft eine sogenannte Waschkolonnenabtrennung angewendet wird.

Die Waschkolonnenabtrennung kann aber auch die einzige Trennstufe bilden.

Ihr kommt die Aufgabe zu, die verunreinigte Mutterlauge möglichst quantitativ von den Kristallen zu trennen.

Waschkolonnen sind aus den in dieser Schrift bereits zitierten Schriften des Standes der Technik bekannt. Sie umfassen einen zu seiner Längsachse normalerweise rotationssymmetrischen Prozessraum, der durch die Wand der Waschkolonne und zwei auf der Symmetrieachse einander gegenüberliegende Enden begrenzt wird, wobei der Einschlusswinkel α zwischen der Raumrichtung der Symmetrieachse und der Vertikalen normalerweise nicht mehr als 20° beträgt. Vorzugsweise ist α möglichst klein bzw. Null.

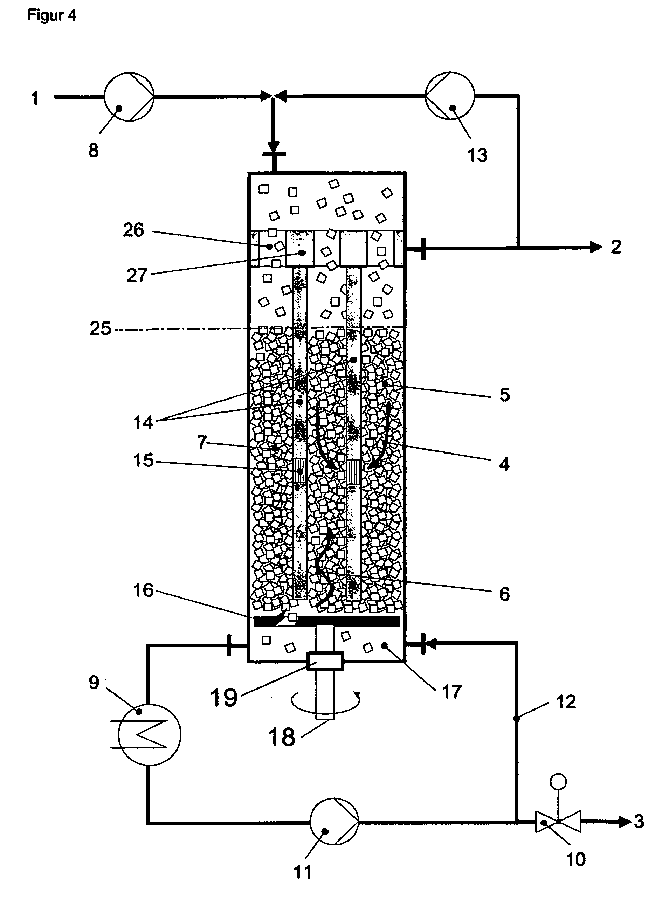

Dem Prozessraum kann ein Verteilerraum vorgelagert sein. Anstelle die Kristallsuspension dem Prozessraum an einem seiner beiden Enden direkt zuzuführen, kann sie zunächst auch dem diesem vorgelagerten Verteilerraum zugeführt werden (vgl. Figur 4). Durch die Wegführung über den Verteilerraum in den Prozessraum wird die Kristallsuspension letzterem besonders gleichmäßig über den Querschnitt des Zufuhr-Endes des Prozessraumes verteilt zugeführt.

Im Prozessraum wird durch Mutterlaugeentzug ein dichteres Kristallbett erzeugt und dieses durch den Prozessraum zu seinem gegenüberliegenden Ende gefördert. Grundsätzlich kommen zur Ausbildung des Kristallbetts unterschiedliche Methoden in Betracht. Bei gravitativ arbeitenden Waschkolonnen wird die Kristallsuspension zwingend am oberen Ende dem Prozessraum zugeführt. Das Kristallbett bildet sich in einem Sedimentationsprozess aus und seine Förderung in die Förderrichtung erfolgt durch die alleinige Einwirkung der Schwerkraft. Die Mutterlauge wird normalerweise durch Überlauf aus dem Prozessraum abgeführt. Beim Erreichen des unteren Endes des Prozessraums werden die Kristalle aufgeschmolzen. Ein Teil des gebildeten, im Vergleich mit den festen Kristallen eine geringere Massendichte aufweisenden, Kristallschmelzestroms strömt dem Dichteunterschied folgend gegen die Förderung des Kristallbetts im Kristallbett nach oben und der restliche Teil wird als Reinschmelzestrom der chemischen Zielverbindung seinem Auslass zugeführt. Da sich im Lauf der Sedimentation im Kristallbett vertikale Kanäle ausbilden können, entlang derer es zu unerwünschten Rückvermischungen kommen kann, sind gravitativ arbeitende Waschkolonnen zumindest auf einem Teil ihrer Höhe mit einem Rührwerk versehen, das einer Ausbildung solcher Kanäle entgegenwirkt.

Die Verwendung gravitativ arbeitender Waschkolonnen (gravimetrischer Waschkolonnen) ist vom erfindungsgemäßen Verfahren ausgenommen, da sich in ihnen weder eine definierte Waschfront ausbildet, noch in ihnen eine rotierende Abtrageinrichtung zum Einsatz kommt.

Das erfindungsgemäße Verfahren ist demzufolge auf Verfahren beschränkt, in denen Waschkolonnen mit einer sogenannten erzwungenen Förderung des Kristallbetts (eine ausführliche Beschreibung der unterschiedlichen Waschkolonnentypen findet sich u. a. in Chem.-Ing. Techn. 57 (1985) Nr. 291 -102, in Chemical Engineering Science Bd. 50, Nr. 17, S. 2712 bis 2729, 1995, Elsevier Science Ltd., in Applied Thermal Engineering Bd. 17, Nr. 8 -10, S. 879 - 888,1997, Verlag Elsevier Science Ltd. und in den in den vorgenannten Literaturstellen aufgeführten Literaturzitaten) verwendet werden.

Waschkolonnen mit erzwungenem Transport (bzw. erzwungener Förderung) des Kristallbetts sind dadurch charakterisiert, dass in die Förderrichtung (bzw. Transportrichtung) des Kristallbetts eine von der Gravitation verschiedene fördernd wirkende Kraft wirkt.

Grundsätzlich kann in Waschkolonnen mit erzwungener Förderung die Kristallsuspension dem Prozessraum deshalb sowohl an dessen oberem Ende als auch an dessen unterem Ende zugeführt und das sich ausbildende Kristallbett somit sowohl von oben nach unten als auch von unten nach oben gefördert werden. In der Regel wird das Kristallbett in Waschkolonnen mit erzwungenem Transport nicht gerührt (falls gerührt wird, dann unter weitestgehender Vermeidung von Axialvermischung). Aus Gründen anwendungstechnischer Zweckmäßigkeit ist das erfindungsgemäße Verfahren auf Verfahren in Waschkolonnen mit einer erzwungenen Förderung des Kristallbetts im Prozessraum von oben nach unten beschränkt, bei denen die Kristallsuspension dem Prozessraum an dessen oberem Ende zugeführt wird (gegebenenfalls über einen diesem vorgelagerten Verteilerraum).

Waschkolonnen mit erzwungener Förderung des Kristallbetts können in zwei Gruppen von Waschkolonnen unterteilt werden: hydraulische Waschkolonnen und mechanische Waschkolonnen. Bei den hydraulischen Waschkolonnen wird die Kristallsuspension z. B. durch Pumpen und/oder hydrostatische Höhe in eine unter Druck stehende Waschkolonne gefördert.

Die durch den Zuführdruck aufgeprägte Flüssigkeitsströmung (d. h., der Förderdruck in Verbindung mit der Abführung von Mutterlauge) sorgt dann für eine Kompaktierung der Kristalle zum Kristallbett und für dessen Förderung (der hydraulische Druck (der von der bewegten Flüssigkeit ausgeübte Druck bzw. der bis zu ihrer Abgabe aus dem Prozessraum resultierende Druckverlust) beträgt üblicherweise 0,1 bis 10 bar, häufig 1 bis 5 bar). Die Mutterlauge strömt normalerweise über Filter (die z. B. in im Prozessraum von oben nach unten verlaufenden Filterrohren in deren unterem Bereich und/oder in der den Prozessraum einhüllenden Waschkolonnenwand im unteren Bereich des Prozessraums enthalten sein können) aus der hydraulischen Waschkolonne ab (jenseits der Filter kann Normaldruck, Unterdruck oder überatmosphärischer Druck herrschen). Die Rückführung eines Teils der aus dem Prozessraum abgeführten Mutterlauge am Zufuhr-Ende und/oder die Zufuhr einer sonstigen Steuerflüssigkeit mit der Kristallsuspension ermöglicht die Regelung der Transportkraft (des Steuerstroms). Eine ausführliche Darstellung hydraulischer Waschkolonnen und ihrer Betriebsweise offenbart die WO 2006/111565. Die Figuren 1 und 4 der vorliegenden Anmeldung zeigen beispielhafte Ausführungsformen einer hydraulischen Waschkolonne.

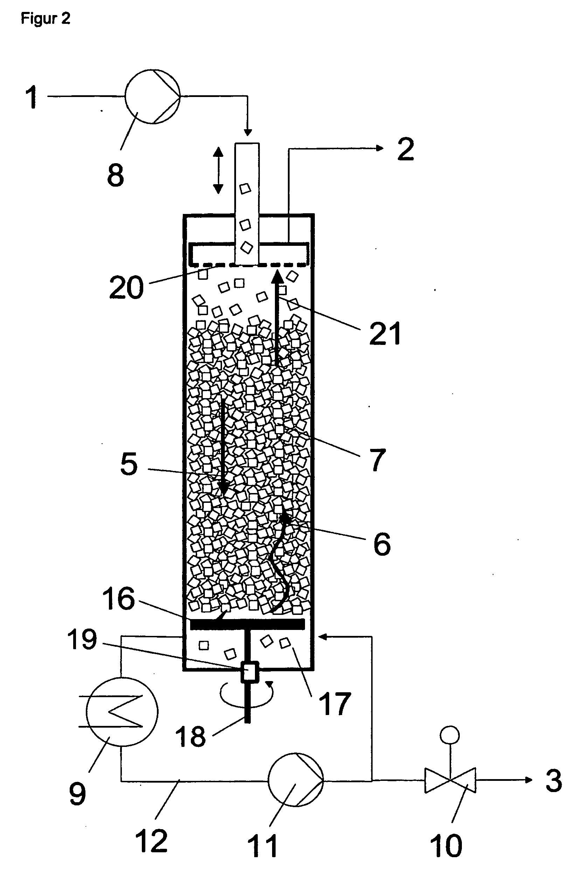

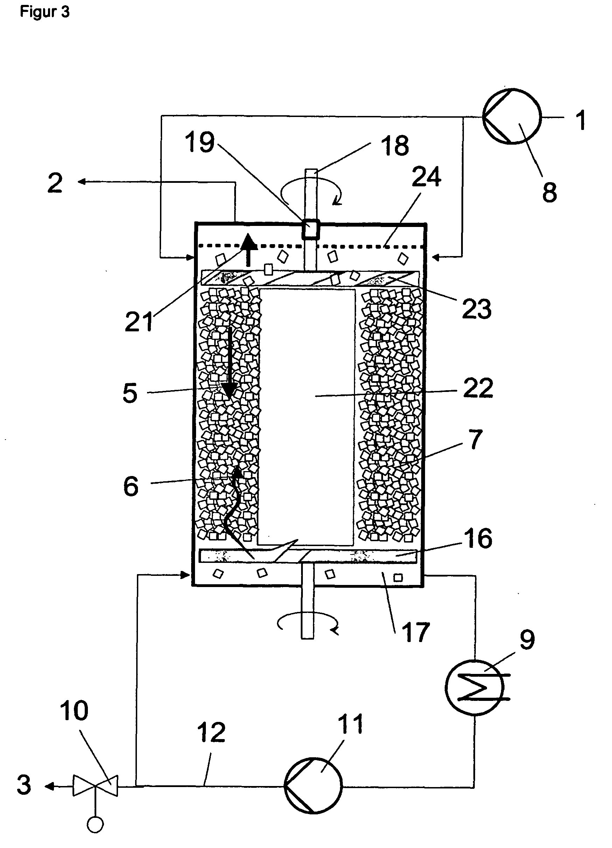

Bei einer mechanischen Waschkolonne wird der Druck (auch bei ihnen weist der Prozessraum einen erhöhten Druck auf) zur Ausbildung und Förderung des Kristallbetts im Prozessraum der Waschkolonne durch eine mechanische Zwangsfördereinrichtung erzeugt (Waschkolonne mit mechanischer Förderung). Im einfachsten Fall kann dies ein semipermeabler Stempel sein, der für die Mutterlauge durchlässig und für die Kristalle der zugeführten Suspension undurchlässig ist (vgl. Fig. 2), und durch dessen periodische Auf- und Abbewegung der Druck zur Verdichtung und Förderung des Kristallbetts erzeugt wird. Die mechanische Verdichtung zu einem Kristallbett und die Förderung desselben kann aber auch durch Abtrennung der Mutterlauge über Filter und mechanischen Transport der Kristalle vom Filter zum Kristallbett mit Hilfe eines rotierenden Förderelements (z. B. eine Schnecke, einen Rührer, eine Wendel oder Spiralen) erfolgen. Die Filter können dabei sowohl in die rotierenden Förderelemente integriert oder am zur Förderrichtung entgegengesetzten Ende (die Figur 3) des Prozessraums angebracht sein.

Bei Waschkolonnen mit erzwungener Förderung des Kristallbetts weist selbiges im Prozessraum eine sogenannte Aufbaufront auf, an der sich kontinuierlich Kristalle der eingeleiteten Kristallsuspension anlagern. Die Aufbaufront bezeichnet also den Übergang von der Kristallsuspension zum Kristallbett und ist durch einen relativ abrupten Anstieg des Kristallgehalts je Volumeneinheit gekennzeichnet. Beim Erfindungsgemäßen Verfahren befindet sich die Aufbaufront in notwendiger Weise im oberen Bereich des Prozessraums.

Am der Aufbaufront gegenüberliegenden Ende des Kristallbetts, das sich beim erfindungsgemäßen Verfahren am unteren Ende des Prozessraums befindet, ist bei Waschkolonnen mit erzwungener Förderung des Kristallbett anwendungstechnisch zweckmäßig eine in der Waschkolonne rotierende Abtrageinrichtung angebracht. Bei dieser kann es sich z. B. um eine kreisrunde Scheibe handeln, die Durchtrittsöffnungen aufweist und mit Messern bestückt ist (z.B. kann jede Durchtrittsöffnung mit einem Messer bestückt sein).

Vom Kristallbett, das auf die rotierende Messerscheibe (auf die rotierende Abtrageinrichtung) zu gefördert wird, trägt die rotierende Messerscheibe (die rotierende Abtrageinrichtung) an dessen auf sie stoßenden Ende kontinuierlich oder zeitlich getaktet einen Strom von Kristallen ab, der durch die Durchtrittsöffnungen der Messerscheibe in den sich in Förderrichtung des Kristallbetts hinter der rotierenden Messer(Abtrag)scheibe (Abtrageinrichtung) an den Prozessraum anschließenden Kristallschmelzeraum der Waschkolonne fließt.

Anstelle einer Durchtrittsöffnungen aufweisenden Messerscheibe kann es sich bei der rotierenden Abtrageinrichtung auch um ein einzelnes (gegebenenfalls in einen Schaft eingearbeitetes (von einem Schaft gehaltenes)) rotierendes Abtragmesser handeln. In diesem Fall strömt der durch das rotierende Abtragmesser abgetragene Kristallstrom an diesem vorbei in den Kristallschmelzeraum. In beiden Fällen, sowohl im Fall der rotierenden Messerscheibe als auch im Fall des rotierenden Einzelmessers, trennt der durch die rotierende Abtrageinrichtung beschriebene Rotationskörper Prozessraum und Kristallschmelzeraum voneinander. Selbstverständlich kommt als rotierende Abtrageinrichtung auch jedwede zwischen einer kreisrunden, Durchtrittsöffnungen aufweisenden, Messerscheibe und einem rotierenden Einzelmesser liegende Übergangsform in Betracht, wie es z.B. auch in der WO 2009/148314 ausgeführt ist. Grundsätzlich kann die Geometrie der Scheibe jedoch beliebig sein.

Die Rotationsachse der Abtrageinrichtung (die Rotationsachse ihrer Antriebswelle) und die Symmetrieachse des rotationssymmetrischen Prozessraums fallen vorzugsweise zusammen. Die beiden Achsen können aber auch in begrenztem Umfang seitlich zueinander versetzt sein (bezogen auf den mittleren (über dessen Höhe gemittelt) Durchmesser des Prozessraums um bis zu 20 % desselben (vorzugsweise um nicht mehr als 10 %, bzw. um nicht mehr als 5 % desselben). Normalerweise beträgt der Einschlusswinkel β zwischen der Raumrichtung der Rotationsachse der Antriebswelle und der Raumrichtung der Symmetrieachse des Prozessraums jedoch bei keiner Projektion der beiden Raumrichtungen in eine Ebene mehr als 20°. Vorzugsweise ist der Winkel β klein und besonders bevorzugt verschwindend.

Das für die Rotation der Abtrageinrichtung erforderliche Drehmoment wird auf diese durch eine um ihre Längsachse rotierende Antriebswelle übertragen, an der die Abtrageinrichtung befestigt ist. Die Antriebswelle selbst ist von unten durch einen in der Waschkolonnenwand befindlichen und in den Kristallschmelzeraum führenden Eingang hindurch in die Waschkolonne geführt. Die Antriebswelle kann grundsätzlich nur bis zur Abtrageinrichtung in die Waschkolonne hineinreichen, oder aber auch in den Prozessraum hinein- bzw. sogar über diesen hinausragen. Die Antriebswelle selbst wird von einem Antriebsaggregat zur Rotation um ihre Längsachse angetrieben. Vorzugsweise handelt es sich bei diesem Antriebsaggregat um einen Motor, besonders bevorzugt um einen Elektromotor (einschließlich Getriebe und Kupplung). Grundsätzlich kann aber auch eine Turbine oder ein hydraulischer Antrieb zur Anwendung kommen. Das Antriebsaggregat befindet sich normalerweise außerhalb der Waschkolonne und wirkt üblicherweise nicht mit seinem Gewicht auf die Antriebswelle ein.

Der in den Kristallschmelzeraum strömende Strom an durch die Abtrageinrichtung vom unteren Ende des Kristallbetts abgetragenen Kristallen (die Rotation und mit ihr das Abtragen können sowohl kontinuierlich als auch zeitlich getaktet erfolgen) wird durch Eintrag von Wärme zu einem Kristallschmelzestrom aufgeschmolzen. Dieser Wärmeeintrag kann bei Waschkolonnen mit erzwungener Förderung des Kristallbetts, wie sie erfindungsgemäß zu verwenden sind, in einer ersten Ausführungsform im Kristallschmelzraum selbst erfolgen (z. B. über entsprechende in den Kristallschmelzeraum eingebaute Vorrichtungen wie Heizschlangen oder elektrische Heizwendeln). Bezogen auf die Stärke des resultierenden Kristallschmelzestroms wird dann aus dem Kristallschmelzeraum nur ein Teilstrom als Reinschmelzestrom über einen Auslass entnommen. Der im Kristallschmelzeraum verbliebene Reststrom steigt aufgrund seiner im Vergleich mit den Kristallen geringeren spezifischen Masse vom Kristallschmelzeraum ausgehend auf und strömt durch die rotierende Abtrageinrichtung hindurch und/oder an der rotierenden Abtrageinrichtung vorbei als Waschschmelzestrom gegen die Bewegungsrichtung des Kristallbetts im Prozessraum von unten nach oben.

Die abgetragenen Kristalle können in einer zweiten Ausführungsform im Kristallschmelzeraum aber auch nur in zuvor bereits erzeugter Kristallschmelze suspendiert werden. Diese Suspension wird dann mittels einer Schmelzkreispumpe in einem Schmelzkreis, der ein größeres Reservoir an Kristallschmelze als der Kristallschmelzeraum für sich allein vorzuhalten vermag, über einen Aufschmelzer (z. B. einen Wärmeübertrager), der auf indirektem (bevorzugt) oder direktem Weg die zum Schmelzen der Kristalle erforderliche Wärme in den Schmelzkreis einträgt, aus dem Kristallschmelzeraum heraus und wieder in diesen zurückgeführt. Selbstverständlich können beide Ausführungsformen aber auch kombiniert zur Anwendung kommen.

Die zweite Ausführungsform ist insbesondere bei thermisch empfindlichen chemischen Zielverbindungen wie z. B. Acrylsäure von Vorteil, da das größere Kristallschmelzereservoir (der Kristallschmelzeumlaufstrom im Schmelzkreis beträgt vorteilhaft 2 bis 30, meist 5 bis 20 m³/h pro m³/h des Stromes an abgetragenen Kristallen (geschmolzen gerechnet); d. h., der Schmelzkreis weist normalerweise einen niederen Gehalt an noch nicht geschmolzenen abgetragenen Kristallen auf, was seine und deren Förderung begünstigt) des Schmelzkreises eine erhöhte Wärmekapazität bedingt, und dadurch bei gleichem Wärmeeintrag eine geringere Temperaturänderung erfährt bzw. bei gleicher Temperatur eine größere Wärmemenge zum Aufschmelzen der in ihm suspendierten Kristalle zur Verfügung zu stellen vermag. Bezogen auf den im Schmelzkreis aus dem abgetragenen Kristallstrom erzeugten Kristallschmelzestrom wird ein Teilstrom als Reinschmelzestrom der chemischen Zielverbindung aus dem Schmelzkreis heraus seinem Auslass zugeführt, während der restliche Teilstrom druckbedingt vom Kristallschmelzestrom ausgehend als Waschschmelzestrom durch die rotierende Abtrageinrichtung hindurch und/oder an der rotierenden Abtrageinrichtung vorbei gegen die Bewegungsrichtung des Kristallbetts in den Prozessraum geführt wird. Die Einstellung der Stärke des ausgelassenen Reinschmelzestroms kann beim erfindungsgemäßen Verfahren grundsätzlich mittels eines Auslassventils vorgenommen werden. Die Kristallschmelze im Kristallschmelzeraum weist normalerweise Schmelzpunkttemperatur auf (üblicherweise wird diese im Kristallschmelzeraum um nicht mehr als 5°C, vorzugsweise um nicht mehr als 3 bzw. 2 °C und besonders bevorzugt um nicht mehr als 1 °C überschritten).

Durch die entgegengesetzt zur Förderrichtung des Kristallbetts strömende Waschschmelze wird das mit Mutterlauge getränkte Kristallbett im Ergebnis praktisch in die im Prozessraum aufwärts strömende Waschschmelze hineingedrückt und als eine Waschwirkung die Mutterlauge im Kristallbett in begrenztem Umfang einfach zurückgedrängt. D. h., bei entsprechender Einstellung des Waschschmelzestroms auf die Rahmenbedingungen des Abtrennprozesses stellt sich ein stationärer Zustand ein, der dadurch gekennzeichnet ist, dass sich auf einer definierten Höhe des Kristallbetts eine sogenannte Waschfront einstellt. Sie ist als diejenige Höhe im Prozessraum definiert, auf der als Funktion der Prozessraumhöhe die höchsten Temperatur- und Konzentrationsgradienten auftreten. Oberhalb und unterhalb der Waschfront erreichen die höhenabhängigen Temperaturen (Konzentrationen) vergleichsweise rasch (in der Regel innerhalb einer Höhenänderung ("Waschfrontbereich" genannt) von weniger als ± 5 cm) einen sich höhenabhängig jeweils nicht mehr ändernden Wert.

Dieser ist im Bereich oberhalb der Waschfront die Temperatur (die entsprechende Konzentration) der dem Prozessraum zugeführten Kristallsuspension und im Bereich unterhalb der Waschfront die Schmelzpunkttemperatur (die entsprechende Konzentration) der Waschschmelze. Die Höhenposition der Waschfront kann durch Regelung des Verhältnisses von gefördertem Kristallmassenstrom zu entgegengeführtem Waschschmelzestrom in begrenztem Umfang variiert werden. Der Höhenabschnitt im Prozessraum von der Waschfront bis zur Aufbaufront wird als Mutterlaugenzone bezeichnet und der Höhenbereich von der Waschfront bis zum der Aufbaufront abgewandten Ende des Kristallbetts wird als Reinschmelzezone bezeichnet. Unterhalb einer jeweiligen Mindestlänge der Waschschmelzezone wird die Waschwirkung mit zunehmender Länge der Waschschmelzezone besser.

Die Temperatur T^{SP}, mit der die Kristallsuspension dem Prozessraum zugeführt wird, entspricht im Regelfall im Wesentlichen derjenigen Temperatur, mit der die Suspension aus dem Suspensionskristallisator herausgeführt worden ist (vgl. DE-A 102007043759). Da die Kristallisationstemperatur in der die von der chemischen Zielverbindung verschiedenen Bestandteile angereichert enthaltenden Mutterlauge der Suspension in notwendiger Weise unterhalb des Schmelzpunktes T^{SCH} der Waschschmelze (der entnommenen Reinschmelze) liegt (Stichwort: "Gefrierpunkterniederung"), ist T^{SP} normaler kleiner als T^{SCH}. Innerhalb des Waschfrontbereichs kommt es deshalb beim Zusammentreffen der von oben vergleichsweise kalt zuströmenden Kristalle mit der von unten vergleichsweise warm zuströmenden Waschschmelze zu einem von der Waschschmelze zu den Kristallen abfließenden Wärmestrom, infolge dessen die Waschschmelze im Waschfrontbereich in Abhängigkeit vom Betrag der Differenz T^{SCH} - T^{SP} teilweise bis vollständig rekristallisiert. Dadurch wird zum einen wenigstens ein Teilstrom des Waschschmelzestroms zurückgewonnen. Der andere Teilstrom (der in günstigen Fällen verschwindend ist und dessen Stärke im Regelfall ≤ 30 % bezogen auf diejenige des Waschschmelzestroms beträgt) verlässt den Prozessraum der Waschkolonne gemeinsam mit aus diesem abgeführter Mutterlauge. Da die Rekristallisation einen weiteren Reinigungsmechanismus des reinigenden Waschkolonnenabtrennverfahrens bildet, erscheint es auf den ersten Blick angebracht, die Suspensionskristallisation bis zu einem Kristallisationsgrad auszuführen, der eine möglichst große Differenz T^{SCH} - T^{SP} bedingt.

Mit einem zunehmenden ΔT^{S} = T^{SCH} - T^{SP} nimmt jedoch auch die Porosität des auf die Abtragvorrichtung zu geförderten Kristallbetts ab, was die Durchlässigkeit desselben für die im Prozessraum aufsteigende Waschschmelze mindert und sowohl den für die Waschschmelze erforderlichen Förderdruck als auch den für die Kristallbettförderung im Gegenzug erforderlichen Förderdruck erhöht. Dies würde die Attraktivität des Verfahrens unter energiebilanztechnischen Gründen mindern. Im Normalbetrieb angewandte Werte für ΔT^{S} betragen daher üblicherweise 1 bis 25 °C, häufig 2 bis 20 °C, oder 5 bis 15 °C.

Der Querschnitt des Prozessraums ist über seine Länge häufig konstant. In der Regel ist es jedoch vorteilhaft, ihn von oben nach unten kurz vor der rotierenden Abtrageinrichtung zu vergrößern (um 5 bis 100 mm bezogen auf seinen Durchmesser). Dies ermöglicht es, die radiale Ausdehnung der Abtrageinrichtung etwas größer als die radiale Ausdehnung des Kristallbetts zu wählen (sie kann grundsätzlich aber auch kleiner als diese sein), was den gleichmäßigen Abtrag an Kristallen über den gesamten Kristallbettquerschnitt begünstigt (vgl. EP-A 1 448 282). Zur Verbesserung der Suspendierung der durch die rotierende Abtrageinrichtung abgetragenen Kristalle in der im Kristallschmelzeraum befindlichen Kristallschmelze, ist es hilfreich, an der Antriebswelle für die Abtrageinrichtung unterhalb der letzteren Paddel zu befestigen, die den Kristallschmelzeraum durchmischen. Diesem Zweck können auch Verstärkungselemente dienen, die zwischen der zur Befestigung der Abtrageinrichtung an der Welle verwendeten Nabe und der Abtrageinrichtung großflächig ausgeführt werden sowie an der Innenwand des Kristallschmelzeraums befestigte Stromstörer (vgl. zu beiden Elementen die Figur 2 der EP-A 1 448 282).

Der Eingang für die Antriebswelle in den Kristallschmelzeraum ist mit einer Dichtung ausgerüstet, die dem nicht beabsichtigten Austritt von Kristallschmelze aus dem Kristallschmelzeraum (in diesem steht die Kristallschmelze unter Druck) durch den Eingang hindurch entgegenwirkt. Als solche Dichtungen kommen beispielsweise Gleitringedichtungen, Stopfbuchsen oder Lippenringdichtungen in Betracht.

Insbesondere im Fall von Acrylsäure als chemischer Zielverbindung ist die Anwendung von doppelt wirkenden achsialen Gleitringdichtungen vorteilhaft, die z. B. auch in der

DE-A 102 28 859 und DE-A 10 2005 003 115 ausgeführt sind. Der Eingang in den Kristallschmelzeraum wird dabei als ein Eingangsraum ausgestaltet, der zwei auf der Längsachse der Antriebswelle einander gegenüberliegende Ausgänge aufweist. Der weiter oben gelegene Ausgang bildet den eigentlichen Eingang für die Antriebswelle in den Kristallschmelzeraum und der weiter unten gelegene Ausgang bildet den Eingang für die Antriebswelle in den Eingangsraum. Sowohl zum einen als auch zum anderen Ausgang hin mit der Antriebswelle fest und undurchlässig verbundene Gleitelemente (Gleitringe) gleiten auf einem im jeweiligen Ausgang feststehend angebrachten Gegenring. Eine Feder drückt den Gleitring normalerweise mit einer Vorspannung von 1 bis 2 bar gegen den Gegenring. Gleitring und Gegenring bilden jeweils ein Gleitringpaar.

Zusätzlich ist der Eingangsraum (Sperrraum) mit einer Sperrflüssigkeit gefüllt, die unter einem höheren Druck als die Kristallschmelze im Kristallschmelzeraum steht. Durch den erhöhten Druck der Sperrflüssigkeit im Vergleich zum im Kristallschmelzeraum herrschenden Druck wird ein Austreten der Kristallschmelze aus dem Kristallschmelzeraum verhindert. Infolge des erhöhten Drucks im Sperrraum fließt ein marginaler Leckagestrom in den Kristallschmelzeraum. Aus Vorratsbehältern wird die Leckagerate kontinuierlich ergänzt. Auf diese Weise gelangt keine Kristallschmelze auf die Gleitfläche zwischen dem oberen Paar aus Gleitring und Gegenring (der Schmierfilm wird von der Sperrflüssigkeit gebildet) und es wird so z. B. einer durch Reibungswärme initiierten unerwünschten radikalischen Polymerisation von Acrylsäureschmelze entgegengewirkt. Im Fall von Acrylsäure als chemischer Zielverbindung eignen sich unter anderem Ethylenglykol und Wasser sowie deren Mischungen als Sperrflüssigkeiten. Besonders bevorzugt sind dabei solche Mischungen, deren Gehalt an Ethylenglykol 10 bis 70 Gew.-%, mit Vorteil 20 bis 40 Gew.-% bzw. 25 bis 35 Gew.-% beträgt. Typische Leckageraten liegen bei weniger als 1 l/h, vorzugsweise weniger als 0,5 l/h und besonders bevorzugt weniger als 0,1 l/h bei Reinschmelzeauslassraten von 0,5 bis 20 m³/h. Nähere Angaben zur Berechnung und Konstruktion von doppelt wirkenden axialen Gleitringdichtungen finden sich in E. Mayer, "Berechnung und Konstruktion von axialen Gleitringdichtungen", Konstruktion 20, Seite 213 bis 319 (1968). Als Werkstoffe für Gleitring und Gegenring kommen eine Reihe unterschiedlicher Werkstoffe in Frage. Dazu zählen Graphit, Siliciumcarbid, Aluminiumoxid, Wolframcarbid, Edelstahl, Chromguss, Polytetrafluorethylen und Sonderwerkstoffe.

Im Fall von Acrylsäure als chemischer Zielverbindung ist SiC der bevorzugte Werkstoff. Wolframcarbid ist eine geeignete Alternative.

Die Abdichtung der Gleitringdichtungselemente gegenüber der Antriebswelle bzw. dem Eingangsgehäuse erfolgt in der Regel mit Nebendichtungen.

Ferner steht insbesondere im Fall von Acrylsäure als chemischer Zielverbindung das weiter oben gelegene Gleitringpaar vorzugsweise frei in der Kristallschmelze, so dass im Bereich dieses Gleitringpaars eine gute äußere Umspülung mit Kristallschmelze erfolgen kann. Diese Ausgestaltung der Gleitringdichtung ist gegenüber einer Ausführung mit einer zurückgezogenen Konstruktion, bei der die die Kristallschmelze berührenden Gleitringe in einem engen zylindrischen Hohlraum liegen, bevorzugt, da durch die gute Umspülung eine ausgezeichnete Kühlung der Gleitringe gewährleistet ist.

Als Werkstoff für die Wand der Waschkolonne (die Umhüllende des Prozessraums) kann z. B. Metall verwendet werden, das je nach reinigend abzutrennender chemischer Zielverbindung unterschiedlichster Art sein kann. Beispielsweise kann es sich um Reinmetalle, aber auch um Legierungen, z. B. Kohlenstoffstähle, Eisenbasislegierungen (Edelstahl, z. B. mit Cr/Ni-Zumischung) oder um Nickelbasislegierungen (z. B. Hastelloy Qualitäten) handeln.

Handelt es sich bei der chemischen Zielverbindung um Acrylsäure, wird als Wandmaterial der Waschkolonne Edelstahl, insbesondere Edelstahl der DIN-Werkstoff-Nr. 1.4571 oder 1.4541, oder bezüglich der in diesen enthaltenen Legierungselemente zu diesen Edelstählen ähnlicher Edelstahl, bevorzugt. Die Stärke der den Prozessraum begrenzenden Metallwand beträgt in zweckmäßiger Weise 3 bis 30 mm, häufig 4 bis 20 mm und meist 5 bis 15 mm. Letzteres gilt insbesondere im Fall von Edelstahl.

Anwendungstechnisch vorteilhaft wird die Waschkolonnenwand wie in der deutschen Anmeldung Nr. 102008040340.7 beschrieben wärmegedämmt bzw. wie in der WO 03/041832 empfohlen begleitbeizt.

Die ortsfeste Fixierung der Wand der Waschkolonne (das Waschkolonnenkörpers) kann auf unterschiedliche Art und Weise bewerkstelligt sein. In einfachster Weise können an der Waschkolonnenwand z. B. drei oder mehr Standbeine befestigt sein. Alternativ kann im unteren Bereich der Waschkolonne an deren Wand ein an ihrem Umfang umlaufender Tragring befestigt sein. Mit diesem kann die Waschkolonne dann auf dem Rand einer geeigneten Ausnehmung aufgesetzt werden. Auch kann der Körper der Waschkolonne von einer Halterung gehalten werden, die ihrerseits an einem Haltepfahl fixiert ist.

Wie bereits erwähnt, muss das obere Ende des Prozessraums nicht in notwendiger Weise mit dem oberen Ende der Waschkolonne zusammenfallen. Vielmehr kann sich oberhalb das Prozessraums ein Verteilerraum befinden, von dem ausgehend die Kristallsuspension über einen Verteilerboden, der den Verteilerraum vom Prozessraum trennt, über den Querschnitt des oberen Endes des Prozessraums gleichmäßig verteilt wird (vgl. z. B. EP-A 1 448 282).

Zur Gewährleistung eines sicheren und stabilen Betriebs eines wie beschrieben durchzuführenden Waschkolonnentrennverfahrens empfiehlt die EP-A 1 448 282, die Antriebswelle in mehr als einem Lager um ihre Längsachse drehbar zu lagern.

Dabei verfolgt die Lagerung das Ziel einer möglichst reibungslosen Rotation der Antriebswelle um ihre Längsachse sowie den Beibehalt einer, abgesehen von ihrer gewollten Rotationsbewegung, feststehenden Position der Abtrageinrichtung im Raum. Um dieses Ziel zu erreichen, ist die Lagerung grundsätzlich so auszuführen, dass sie allen in den verschiedenen Betriebszuständen für möglich gehaltenen Krafteinwirkungen in Längsrichtung der Antriebswelle und senkrecht dazu Rechnung trägt. Der Begriff Kraft mein dabei in dieser Schrift stets die insgesamt wirkende, aus verschiedenen individuellen Kraftbeiträgen resultierende, Gesamtkraft oder in ausgewählte Raumrichtungen wirkende Komponenten derselben.

Der Regelfall von wie beschreiben durchzuführenden Verfahren zum Abtrennen einer chemischen Zielverbindung aus einer Suspension ihrer Kristalle in Mutterlauge mit einem in der Waschkolonne von oben nach unten geförderten Kristallbett ist ebenso wie die vorliegende Anmeldung auf Verfahren beschränkt, bei denen im trennwirksamen Normalbetrieb die an der Antriebswelle in deren Längsrichtung angreifende Kraft nach unten (von geförderten Kristallbett weg) gerichtet ist.

Dies ist unter anderem darauf zurückzuführen, dass im Regelfall der dominierende Beitrag zur in Längsrichtung der Antriebswelle an der Antriebswelle angreifenden Kraft im trennwirksamen Verfahrensbetrieb die Gewichtskraft GM der Gesamtmasse der Antriebswelle und aller an ihr befestigten mitrotierenden Bauteile der Waschkolonne, einschließlich der Abtrageinrichtung, ist (die selbstredend um den archimedischen Auftrieb verringert wirkt).

Selbiges trifft nicht zuletzt dann zu, wenn vorgenannte Gewichtskraft GM wenigstens 3 kN, oder wenigstens 5 kN, oder wenigstens 8 kN, oder wenigstens 10 kN, oder wenigstens 13 kN beträgt. In der Regel wird die Gewichtskraft GM nicht mehr als 50 kN, meist nicht mehr als 40 kN und teilweise nicht mehr als 30 kN betragen. Dies vor allem dann, wenn die Abtrageinrichtung, oder die Abtrageinrichtung und die Antriebswelle, oder die Abtrageinrichtung, die Antriebswelle und sonstige mit der Antriebswelle fest verbundene Bauteile aus Werkstoffen gefertigt sind, deren spezifische Masse (deren Massendichte) ≥ 3 g/cm³, oder ≥ 5 g/cm³, oder ≥ 7 g/cm³ (bezogen auf 25 °C und 1 atm) und gleichzeitig die Massendichte der Kristallschmelze im Kristallschmelzeraum sowie der Mutterlauge und Kristallsuspension im Prozessraum ≤ 1,5 g/cm³ oder sogar ≤ 1,3 bzw. ≤ 1,1 g/cm³ beträgt (normalerweise liegt sie ≥ 0,7 g/cm³). In der Regel liegt die vorgenannte Werkstoffdichte bei ≤ 18 g/cm³.

Da die Förderrichtung des Kristallbetts bei den für diese Anmeldung relevanten Waschkolonnenabtrennverfahren gezielt auf die Abtrennvorrichtung zu gerichtet ist, wird der vorstehend angesprochene Beitrag der Gewichtskraft GM in den verschiedenen erwartbaren Betriebszuständen durch einen zusätzlichen von oben nach unten gerichteten Kraftbeitrag, der auf die Abtrageinrichtung einwirkt, noch verstärkt. Als von unten nach oben gerichtete Kraftbeiträge sind augenscheinlich lediglich solche von vergleichsweise vernachlässigbarem Ausmaß zu berücksichtigen.

Zum einen ist dies der aus dem Druckverlust ΔP^{W} der Waschschmelze beim Passieren der Abtrageinrichtung resultierende Kraftbeitrag. Er muss in notwendiger Weise vergleichsweise klein sein, da nicht nur die Waschschmelze die Abtrageinrichtung von unten nach oben, sondern auch der durch die Abtrageinrichtung vom Kristallbett abgetragene Kristallstrom die Abtrageinrichtung von oben nach unten passieren können muss.

Da dem Waschschmelzestrom und dem Kristallstrom dazu die selben, den Prozessraum und den Kristallschmelzeraum durch die Abtrageinrichtung hindurch und/oder an der Abtrageinrichtung vorbei miteinander verbindenden Passagen zur Verfügung stehen (die Kristalle müssen gegen den aufsteigenden Waschschmelzestrom nach unten strömen können), weist die Abtrageinrichtung anwendungstechnisch zweckmäßig ein vergleichsweise großes Öffnungsverhältnis OV auf (darunter wird in dieser Schrift, bezogen auf die Abtrageinrichtung im nicht rotierenden Zustand, das Verhältnis der Summe der Querschnittsflächen der durch die Abtrageinrichtung und/oder der an der Abtrageinrichtung vorbei führenden Passagen zur Querschnittsfläche des Kristallbetts am seinem der Abtragvorrichtung zugewandten Ende verstanden (ist die Querschnittsfläche der Passage durch die Passage hindurch nicht konstant, ist für die Summenbildung die jeweils kleinste Querschnittsfläche der Passage zu verwenden)), was geringe ΔP^{W}-Werte bedingt (vor allem, wenn man berücksichtigt, dass der Waschschmelzemassenstrom in keinem Betriebszustand größer sein kann, als der über die Kristallsuspension in den Prozessraum geführte Kristallmassenstrom). Üblicherweise beträgt OV beim wie beschrieben durchzuführenden Waschkolonnenabtrennverfahren wenigstens 0,05 oder wenigstens 0,1 bzw. wenigstens 0,2, häufig wenigstens 0,3 und vielfach wenigstens 0,5 oder mehr (teilweise sogar wenigstens 0,9). In natürlicher Weise beträgt OV < 1, meist ≤ 0,95. D. h., es ist davon auszugehen, dass ΔP^{W} in allen Betriebszuständen deutlich unterhalb von 20 mbar liegt.

Zum anderen ist dies ein aus dem Sachverhalt resultierender Kraftbeitrag, dass die Fläche (gemeint ist diejenige Fläche, die von der Messerschneide zum Messerrücken verläuft und bei der Rotation der Abtrageinrichtung dem Kristallbett zugewandt ist) der Abtragelemente (Abtragklingen, Abtragmesser) der Abtrageinrichtung und die Rotationsachse der Antriebswelle normalerweise einen spitzen Winkel γ (in der Regel beträgt γ 20 bis 70°, vorzugsweise 30 bis 60°) einschließen (normalerweise weist die Abtrageinrichtung auf ihrer dem Kristallbett zugewandten Seite Abtragelemente auf, die von der Abtrageinrichtung zum der Abtrageinrichtung zugewandten Ende des Kristallbetts ragen). Dies bewirkt, dass das Kristallbett auf das vom Kristallbett Kristalle abtragende Abtragelement (und damit auf die gesamte Abtrageinrichtung) beim Abtragen eine Reaktionskraft ausübt, die einen in achsialer Richtung der Antriebswelle nach oben gerichteten (auf die Bewegung des Kristallbetts zu gerichteten) Kraftanteil aufweist (Stichwort: "Korkenzieherprinzip"). Der Betrag dieses Kraftbeitrags ist für die verschiedenen Betriebszustände des in Rede stehenden Waschkolonnenabtrennverfahrens als geringfügig anzunehmen, da davon ausgegangen werden kann, dass die innere Verformbarkeit des Kristallbetts vergleichsweise groß ist (die einzelnen Kristalle des Kristallbetts sind üblicherweise vergleichsweise leicht gegeneinander verschiebbar).

Zur Gewährleistung eines möglichst sicheren und stabilen sowie reibungslosen Waschkolonnenabtrennverfahrens mit zwangsweise von oben nach unten gefördertem Kristallbett sollte es daher vor dem Hintergrund der vorstehend durchgeführten Betrachtungen und in Anlehnung an die EP-A 1 448 282 ausreichend sein, wenn die Antriebswelle in mehr als einem Lager um ihre Längsachse drehbar gelagert ist und die Lagerung in einem der Lager so durchgeführt ist, dass die Lagerung in diesem Lager die an der Antriebswelle in deren Längsrichtung nach unten gerichtet angreifende Kraft aufnimmt und die Lagerung in wenigstens zwei Lagern so ausgeführt ist, dass die Lagerung in jedem dieser zwei Lager die von der Antriebswelle im jeweiligen der zwei Lager radial nach außen wirkenden Kräfte aufnimmt.

Beim trennwirksamen Betrieb einer solchermaßen ausgerüsteten Waschkolonne mit im Prozessraum von oben nach unten geführter erzwungener Förderung des Kristallbetts ergaben sich jedoch bei längerer Betriebsdauer unerwartete und plötzlich auftretende Probleme. Diese bestanden beispielsweise darin, dass bei Anwendung einer doppelt wirkenden achsialen Gleitringdichtung für den Eingang der Antriebswelle in den Kristallschmelzeraum selbige nach längerem störungsfreiem Betrieb plötzlich undicht wurde. Eingehende Analysen der beobachteten Betriebsstörungen führten zu dem überraschenden Ergebnis, dass die im Normalbetrieb des Verfahrens (bezogen auf die Zeitdauer einer ununterbrochenen Betriebsperiode (von z. B. wenigstens 1 h, oder wenigstens 10 h, oder wenigstens 100 h) des Abtrennverfahrens ein Zeitraum von insgesamt mehr als 95 % der Zeitdauer) an der Antriebswelle in deren Längsrichtung stetig nach unten gerichtet angreifende Kraft in nicht vorhersehbaren und wenig wahrscheinlichen singulären Betriebszuständen offensichtlich wenigstens kurzzeitig ihre Richtung von "nach unten gerichtet" zu "nach oben gerichtet" wechselte (dies ist nicht zuletzt deshalb überraschend, weil es dazu an Kraftbeiträgen bedarf, die in ihrer Summe die Summe der nach unten gerichteten Kraftbeiträge übersteigen). Die dadurch in Längsrichtung der Antriebswelle an selbiger temporär nach oben gerichtet angreifende Kraft führt zu einer Aufwärtsbewegung der Antriebswelle und der an ihr befestigten Bauteile, die ab einem, von der Detailgestaltung der Waschvorrichtung abhängigen, Umfang unterschiedlichste Schäden und Störungen verursacht.

Die Aufgabe der vorliegenden Erfindung bestand daher darin, ein Verfahren zum reinigenden Abtrennen einer chemischen Zielverbindung aus einer Suspension ihrer Kristalle in Mutterlauge mit einer eine Waschkolonne unter erzwungener Förderung des Kristallbetts von oben nach unten in derselben zur Verfügung zu stellen, das die beschriebenen Betriebsprobleme nicht mehr oder allenfalls noch in vermindertem Umfang aufweist.

Als Lösung der Aufgabe wird eine Verfahren zum reinigenden Abtrennen einer chemischen Zielverbindung aus einer Suspension ihrer Kristalle in Mutterlauge, mit einer Waschvorrichtung, die als wenigstens ein Element eine aus verschiedenen Bauteilen bestehende Waschkolonne umfasst, die als ein erstes Bauteil eine ortsfest fixierte Wand aufweist, die einen zu seiner Längsachse rotationssymmetrischen Prozessraum und einen sich an diesen anschließenden Kristallschmelzeraum umhüllt, wobei der Einschlusswinkel α zwischen der Raumrichtung der Symmetrieachse und der Vertikalen nicht mehr als 20° beträgt und der Prozessraum durch die Wand der Waschkolonne und zwei auf der Symmetrieachse einander gegenüberliegende Enden begrenzt wird, von denen das auf der Symmetrieachse höher gelegene Ende das Zufuhr-Ende und das auf der Symmetrieachse tiefer gelegene Ende das Abtrag-Ende bildet, bei dem
- am Zufuhr-Ende ein Strom der Suspension in den Prozessraum geführt wird,
- unter Zurückhaltung der Kristalle und unter Ausbildung eines Kristallbetts im Prozessraum aus dem in den Prozessraum geführten Suspensionsstrom ein Mutterlaugestrom aus dem Prozessraum abgegeben wird,
- als weiteres Bauteil der Waschkolonne in derselben am Abtrag-Ende des Prozessraums eine Abtrageinrichtung rotiert,
- das Kristallbett im Prozessraum mit wenigstens einer von der Gravitation verschiedenen Kraft und parallel zur Symmetrieachse des Prozessraums auf die rotierende Abtrageinrichtung zu gefördert wird und dabei auf die Abtrageinrichtung stößt,
- die rotierende Abtrageinrichtung vom auf sie stossenden Kristallbett Kristalle abträgt,
- der Strom der abgetragenen Kristalle durch die rotierende Abtrageinrichtung hindurch und/oder an der rotierenden Abtrageinrichtung vorbei in den sich in Förderrichtung des Kristallbetts hinter der Abtrageinrichtung an den Prozessraum anschließenden Kristallschmelzeraum der Waschkolonne fließt,
- als weiteres Bauteil der Waschkolonne eine Antriebswelle, die von einem Antriebsaggregat zur Rotation um ihre Längsachse angetrieben wird, von unten durch einen in den Kristallschmelzeraum führenden Eingang hindurch in die Waschkolonne geführt ist, wobei der Einschlusswinkel β zwischen der Raumrichtung der Rotationsachse der Antriebswelle und der Raumrichtung der Symmetrieachse des Prozessraums bei keiner Projektion der beiden Raumrichtungen in eine Ebene mehr als 20° beträgt,
- die Abtrageinrichtung an der Antriebswelle befestigt ist und die rotierende Antriebswelle das für die Rotation der Abtrageinrichtung erforderliche Drehmoment auf diese überträgt,
- der in den Kristallschmelzeraum geförderte Kristallstrom im Kristallschmelzeraum und/oder in einem durch den Kristallschmelzeraum geführten Schmelzkreis durch Eintrag von Wärme zu einem Kristallschmelzestrom aufgeschmolzen wird,
- der Eingang für die Antriebswelle in den Kristallschmelzeraum mit einer Dichtung ausgerüstet ist, die dem nicht beabsichtigten Austritt von Kristallschmelze aus dem Kristallschmelzeraum durch den Eingang in diesen hindurch entgegenwirkt,
- bezogen auf die Stärke des vorgenannten Kristallschmelzestroms vom Kristallschmelzeraum ausgehend ein Teilstrom an Kristallschmelze als Waschschmelzestrom durch die rotierende Abtrageinrichtung hindurch und/oder an der rotierenden Abtrageinrichtung vorbei gegen die Bewegungsrichtung des Kristallbetts so in den Prozessraum geführt wird, dass sich im Kristallbett eine Waschfront ausbildet, die das Kristallbett in eine Mutterlaugenzone und in eine Waschschmelzezone aufteilt, und der restliche Teilstrom als Reinschmelzestrom der chemischen Zielverbindung seinem Auslass zugeführt wird,
- die an der Antriebswelle in deren Längsrichtung im Normalbetrieb des Verfahrens angreifende Kraft stetig nach unten gerichtet ist,
- die Antriebswelle in mehr als einem Lager um ihre Längsachse drehbar gelagert ist,
- die Lagerung in einem der Lager so ausgeführt ist, dass die Lagerung in diesem Lager die an der Antriebswelle in deren Längsrichtung nach unten gerichtet angreifende Kraft aufnimmt, und
- die Lagerung in wenigstens zwei Lagern so ausgeführt ist, dass die Lagerung in jedem dieser zwei Lager die von der Antriebswelle im jeweiligen der zwei Lager radial nach außen wirkenden Kräfte aufnimmt,
zur Verfügung gestellt, das dadurch gekennzeichnet ist, dass zusätzlich die Lagerung in einem der Lager so ausgeführt ist, dass die Lagerung in diesem Lager eine an der Antriebswelle in deren Längsrichtung nach oben gerichtet angreifende Kraft aufzunehmen vermag, und diejenige Lagerung in den wenigstens zwei Lagern, die so ausgeführt ist, dass sie eine an der Antriebswelle in deren Längsrichtung nach oben gerichtet angreifende Kraft aufzunehmen vermag, so ausgeführt ist, dass sie an der Antriebswelle in deren Längsrichtung nach oben gerichtet angreifende Kräfte aufzunehmen vermag, die ≥ 50 kN betragen.

Gegebenenfalls sind die singulären Betriebszustände darauf zurückzuführen, dass sich bei der Rekristallisation der in der Waschkolonne im nach unten geförderten Kristallbett aufsteigenden Waschschmelze im Waschfrontbereich zwischen den einzelnen Kristallen in sprunghaft erhöhtem Umfang kristalline Brücken ausbilden (z. B. wenn ΔT^{s} unbeabsichtigt und unbemerkt zu groß wird), was der Verschiebbarkeit der einzelnen Kristalle zueinander entgegenwirkt und die erwähnte Reaktionskraft des Kristallbetts auf die Abtragelemente der Abtrageinrichtung sprunghaft erhöhen kann. Auch können Störungen des Waschschmelzflusses aus dem Kristallschmelzeraum heraus in den Prozessraum hinein (z. B. nach einer Verfahrensunterbrechung) dazu führen, dass in der Abtrageinrichtung enthaltene Durchgänge (Passagen) für den Waschschmelzestrom und den Strom der abgetragenen Kristalle zugehen (verstopfen oder zukristallisieren). Daraus kann ein sprunghafter Anstieg des Drucks im Kristalischmelzeraum auf die Abtrageinrichtung resultieren, der ebenfalls zu einer unerwünschten achsialen Bewegung der Abtrageinrichtung und der sie tragenden Antriebswelle auf das Kristallbett zu beitragen kann (auch kann im durch den Kristallschmelzeraum geführten Schmelzkreis der Querschnitt der entsprechenden Leitung durch blockierende Kristalle vermindert und als Folgewirkung der Druck im Schmelzkreis dadurch erhöht werden). Wird derartigen Bewegungen der Antriebswelle und der in ihr befestigten mitrotierenden Bauteile der Waschkolonne nicht erfindungsgemäß entgegengewirkt, so kann nicht nur eine Beschädigung der verwendeten Dichtung sondern auch eine darüber hinaus gehende Beschädigung der Waschkolonne resultieren (beispielsweise kann die sich aufwärts bewegende Abtrageinrichtung die Filterrohre einer hydraulischen Waschkolonne beschädigen).

Der Begriff Lager schließt in dieser Schrift sowohl Gleit- als auch Wälzlager ein. Das sind im Handel käuflich zu erwerbende Systeme, die zwei zueinander bewegliche Teile, die Lagerpartner, umfassen. Bei diesen handelt es sich im Wesentlichen entweder um ineinander gestellte (gefügte) konzentrische Ringe (einen inneren und einen äußeren), wobei die Ringöffnung des Innenrings die Durchgangsöffnung für die zu lagernde Welle bildet, oder um zwei übereinander angeordnete Scheiben (eine obere und eine untere), von denen jede eine Durchgangsöffnung für die zu lagernde Welle aufweist. Lager der ersteren Struktur sollen hier als "konzentrische Lager" und Lager der letzteren Struktur sollen hier als "Sandwich-Lager" oder als Lager mit Sandwichstruktur bezeichnet werden. Wälzlager sind Lager, bei denen die Lagerpartner durch rollende Körper getrennt (beabstanded) sind (sogenannte Wälzkörper), auf denen die Partner des Lagers mit ihrer Laufbahn laufen können. Als Wälzkörper können Kugeln, Zylinder, Nadeln, Tonnen oder Kegel verwendet werden. Bei modemen Wälzlagern werden die Wälzkörper durch einen sie jeweils umgebenden Käfig in gleichem Abstand gehalten. Im Fall von Gleitlagern sind die beiden Lagerpartner nur durch einen Schmierfilm (ei nen Gleitfilm) voneinander getrennt. Im Grenzfall kann der äußere Umfang der zu lagernden Welle die Funktion eines Lagerpartners übernehmen (mit diesem zusammenfallen).

Die Lagerung einer Antriebswelle in einem Lager, mit der Maßgabe, dass die Antriebswelle ihre Rotationsfähigkeit beibehält, wird nun in an sich bekannter Weise so ausgeführt, dass zunächst die Antriebswelle entlang ihrer Längsachse durch die Durchgangsöffnung des Lagers hindurch bis zu der Stelle geführt ist, wo die Lagerung wirken soll (d. h., ist eine Antriebswelle in mehr als einem Lager um ihre Längsachse drehbar gelagert, so sind diese Lager auf der Längsachse der Antriebswelle hintereinander angeordnet). Die Abmessungen sind dabei so aufeinander abgestimmt, dass (wenigstens haftreibungsbedingt) einer der beiden Lagerpartner auf der Antriebswelle sitzt ("der Wellenpartner") und mit dieser mitrotiert ("mitrotierender Lagerpartner"), während der andere Lagerpartner an oder in einem die Antriebswelle umgebenden Gehäuse (generische Bezeichnung für jedwede ortsfeste Basis) sitzt ("der Gehäusepartner") und bezüglich der Rotation der Antriebswelle um ihre eigene Längsachse steht ("stehender Lagerpartner"). Beispielsweise kann das Gehäuse am Waschkolonnenkörper als dessen Fortsetzung nach unten befestigt sein und aus mehreren miteinander verschraubten Elementen bestehen.

Darüber hinaus wird durch die individuelle Ausgestaltung der inneren Struktur des Lagers (das Design (die Auslegung) des Lagers; z. B. die Geometrie der Wälzkörper, die Gestalt der Lagerpartner, die Relativanordnung der Lagerpartner) und einer für die jeweilige Lagerung spezifischen Fixierung der Lagerpartner im Gehäuse bzw. auf der Antriebswelle sowohl die mögliche Positionierung der Lagerpartner zueinander als auch zum Gehäuse und zur Antriebswelle bedarfsgerecht so festgelegt und begrenzt, dass an der Antriebswelle in deren Längsrichtung nach unten und/oder nach oben gerichtet angreifende und/oder von der Antriebswelle im Lager radial nach außen wirkende Kräfte von der Lagerung bedarfsgerecht aufgenommen und in die umgebende Konstruktion geleitet werden können und die Kräfte keine ungewollte Bewegung der Antriebswelle bewirken (als Quelle für von der Antriebswelle (im Lager) radial nach außen wirkende Kräfte kommen z. B. eine Unwucht der Antriebswelle und die rotierende Abtrageinrichtung in Betracht).

Eine Lagerung der Antriebswelle in einem Lager, die so ausgeführt ist, dass sie nur eine an der Antriebswelle in deren Längsrichtung nach unten gerichtet angreifende Kraft oder nur eine an der Antriebswelle in deren Längsrichtung nach oben gerichtet angreifende Kraft aufzunehmen vermag, wird als einseitige (oder einseitig belastbare) Achsiallagerung bezeichnet. Eine Lagerung der Antriebswelle in einem Lager, die so ausgeführt ist, dass sie nur sowohl eine von der Antriebswelle in deren Längsrichtung nach unten gerichtet angreifende Kraft, als auch eine an der Antriebswelle in deren Längsrichtung nach oben gerichtet angreifende Kraft aufzunehmen vermag, wird als zweiseitige oder beidseitige (bzw. zweiseitig oder beidseitig belastbare) Achsiallagerung bezeichnet.

Sandwich-Lager bzw. Lager mit Sandwichstruktur werden generell als Achsial-Lager bezeichnet, weil sie entweder nur zur Ausführung einer ein- oder beidseitigen Achsiallagerung geeignet sind, oder zur Ausführung einer Lagerung, die in erster Linie in Längsrichtung der Antriebswelle an dieser angreifende Kräfte aufzunehmen vermag.

Zur Ausführung einer einseitigen Achsiallagerung in einem Sandwich-Lager (einem Achsial-Lager) wird dann mit Hilfe geeigneter Sperrelemente (Fixiermittel) die Position des mit der Antriebswelle nicht mitrotierenden Lagerpartners ("der Gehäusescheibe") im Gehäuse längs zur Rotationsachse der Antriebswelle in jener Richtung festgelegt, d. h. fixiert (eine weitergehende Verschiebung der Gehäusescheibe im Gehäuse in dieser Richtung gesperrt (blockiert)), in welche die an der Abtriebswelle in deren Längsrichtung angreifende und durch die Lagerung aufzunehmende Kraft gerichtet ist. Gleichzeitig wird die Position des mitrotierenden Lagerpartners ("der Wellenscheibe") auf der Antriebswelle mit Hilfe geeigneter Sperrelemente (Fixiermittel) in der entgegengesetzten Richtung festgelegt, d. h. fixiert (eine weitergehende Verschiebung der Wellenscheibe auf der Antriebswelle in diese Richtung gesperrt (blockiert)). Entsprechender Positionsfestlegungen in die jeweilige Gegenrichtung bedarf es nicht.

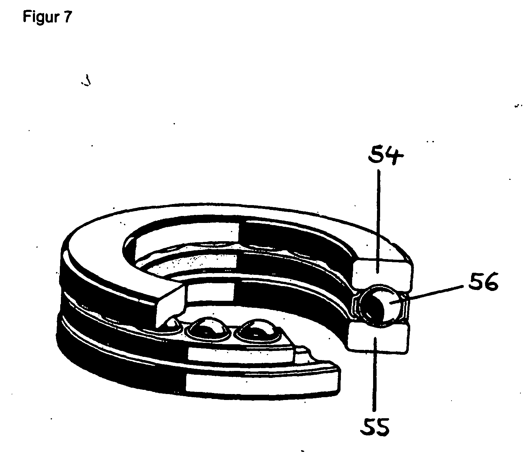

Für die Ausführung einer einseitigen Achsiallagerung können z. B. AchsialRillenkugellager (sie umfassen eine Wellenscheibe, eine Gehäusescheibe mit ebener oder kugeliger Auflagefläche und einen Satz Kugeln als Wälzkörper, vgl. Figur 7) oder Achsial-Zylinderrollenlager (sie umfassen eine Wellenscheibe, eine Gehäusescheibe und einen Kranz zylindrischer Rollen als Wälzkörper) verwendet werden. Bei AchsialPendelrollenlagern (vgl. Figur 3) wird bekanntermaßen die Belastung von der oberen Laufbahn auf die untere (und umgekehrt) unter einem Winkel zur Lagerachse übertragen. Sie eignen sich daher zur Ausführung von Lagerungen, die zusätzlich zu einer achsialen Lagerung in eine der beiden Längsrichtungen noch eine Radiallagerung gewährleisten (mit einem Aufnahmevermögen für Radialbelastungen von bis zu 55 % des Aufnahmevermögens der Achsialbelastung). Eine solche gemischt belastbare Lagerung in einem Lager beliebiger Art wird ganz allgemein als Stützlagerung bezeichnet. Achsial-Pendelrollenlager eignen sich zur Aufnahme höchster einseitiger Achsialbelastungen. Die Verwendung eines Achsial-Pendelrollenlagers ist deshalb beim erfindungsgemäßen Verfahren für jene Lagerung in einem der Lager bevorzugt, bei der die Lagerung im Lager so ausgeführt ist, dass sie die an der Antriebswelle in deren Längsrichtung nach unten gerichtet angreifende Kraft aufnimmt (sie kann beim erfindungsgemäßen Verfahren in den verschiedenen Betriebszuständen besonders hohe Werte annehmen). Ein weiteres wesentliches Merkmal der Achsial-Pendelrollenlager ist ihre Winkelbeweglichkeit und ihre Unempfindlichkeit gegenüber Schiefstellungen der Welle zum Gehäuse bzw. Durchbiegungen der Welle. Achsial-Pendelrollenlager haben eine große Anzahl unsymmetrischer Rollen als Wälzkörper und eine enge Schmiegung zwischen den Laufbahnen und den Rollen.

Zur Ausführung einer zweiseitigen Achsiallagerung werden anwendungstechnisch zweckmäßig Lager mit Sandwichstruktur verwendet, die zwei Gehäusescheiben und eine Wellenscheibe umfassen, wobei die Wellenscheibe von unten nach oben zwischen den beiden Gehäusescheiben platziert ist. Durch Fixierung der unteren Gehäusescheibe im Gehäuse wird deren Position nach unten, und durch Fixierung der oberen Gehäusescheibe im Gehäuse wird deren Position nach oben festgelegt. Entsprechender Positionsfestlegungen in die jeweilige Gegenrichtung bedarf es nicht. Die Position der Wellenscheibe auf der Antriebswelle wird durch entsprechende Fixierung sowohl nach oben als auch nach unten festgelegt.

Zur Ausführung einer zweiseitigen Achsiallagerung eignen sich insbesondere Zweiseitige-Achsial-Rillenkugellager. Sie umfassen eine Wellenscheibe und zwei Gehäusescheiben mit ebener oder kugeliger Auflagefläche und zwei Sätze von Kugeln als Laufkörper.

Bei der Lagerung einer Welle in einem konzentrischen Lager ist die Welle stets so in das Lager geführt, dass der innere Ring auf der Antriebswelle sitzt (Wellenring) und mit dieser mitrotiert, während der andere Lagerpartner (der äußere Ring) am oder im Gehäuse sitzt (Gehäusering) und relativ zur Rotation der Antriebswelle steht. Aus diesem Grund vermag eine Lagerung der Antriebswelle in einem konzentrischen Lager in einem gewissen Umfang immer von der Antriebswelle im Lager radial nach außen wirkende Kräfte aufzunehmen. Wird die Lagerung der Antriebswelle in einem konzentrischen Lager darüber hinaus so ausgeführt, dass sie keine an der Antriebswelle in deren Längsrichtung angreifenden Kräfte aufzunehmen vermag, so resultiert eine Lagerung, die als Radiallagerung bezeichnet wird. Die Antriebswelle wäre in diesem Fall trotz drehbarer Lagerung in einem Lager durch längs der Antriebswelle an ihr angreifende Kräfte in beide Längsrichtungen verschiebbar. Eine Radiallagerung resultiert z. B. dann, wenn bei einer Lagerung der Antriebswelle in einem konzentrischen Wälzlager zwar die Position des Wellenrings (des Innenrings) mit Hilfe geeigneter Sperrelemente (Fixiermittel) auf der Antriebswelle in beide Längsrichtungen festgelegt (fixiert) ist (die Verschiebung des Wellenrings ist in beide Längsrichtungen gesperrt (blockiert)), der Gehäusering (der Außenring) im Gehäuse jedoch längs der Rotationsachse der Antriebswelle in beide Längsrichtungen verschiebbar sitzt. In diesem Fall würde sich die Antriebswelle im Fall einer in ihrer Längsrichtung an ihr angreifenden Kraft gemeinsam mit dem Lager in Richtung der angreifenden Kraft bewegen. Wird umgekehrt vorgegangen (die Position des Gehäuserings ist in beide Längsrichtungen festgelegt und der Wellenring sitzt in beide Längsrichtungen verschiebbar auf der Antriebswelle), so würde eine an der Antriebswelle in ihrer Längsrichtung angreifende Kraft die Antriebswelle in Kraftrichtung durch die Bohrung des konzentrischen Wälzlagers schieben. Die beiden beispielhaft ausgeführten Fälle einer Radiallagerung werden auch als Loslagerung bezeichnet.

Zusätzlich kann durch die individuelle Ausgestaltung der inneren Struktur eines konzentrischen Lagers (das Design (die Auslegung) des Lagers; z. B. die Geometrie der Wälzkörper, die Gestalt der Lagerpartner, die Relativanordnung der Lagerpartner) und eine für die jeweilige Lagerung spezifische Festlegung (Fixierung) der Position der Lagerpartner in Längsrichtung der Antriebswelle im Gehäuse bzw. auf der Antriebswelle die Lagerung in einem konzentrischen Lager in an sich bekannter Weise so ausgeführt werden, dass die Lagerung zusätzlich zu den von der Antriebswelle im Lager radial nach außen wirkenden Kräften auch noch in der Längsrichtung der Antriebswelle an dieser in einer der beiden Längsrichtungen (d. h., nach unten oder nach oben) oder in beiden Längsrichtungen angreifende Kräfte aufzunehmen vermag. Die im ersten Fall resultierende Lagerung wird als Stützlagerung bezeichnet, im letzteren Fall spricht man von einer Führungslagerung. Eine Lagerung der Antriebswelle in einem Lager, die so ausgeführt ist, dass sie in Längsrichtung der Antriebswelle in beiden Längsrichtungen angreifende Kräfte aufzunehmen vermag, wird generell auch als beidseitige Festlagerung bezeichnet (ist die Lagerung so ausgeführt, dass sie in Längsrichtung der Antriebswelle nur in einer Längsrichtung angreifende Kräfte aufzunehmen vermag, wird sie generell auch als einseitige Festlagerung bezeichnet).

Bei einer Führungslagerung der Antriebswelle in einem konzentrischen Wälzlager wird sowohl die Position des Wellenrings (des Innenrings) auf der Antriebswelle in beide Längsrichtungen als auch die Position des Gehäuserings im Gehäuse längs zur Rotationsachse der Antriebswelle in beide Richtungen mit Hilfe geeigneter Sperrelemente (Fixiermittel) festgelegt (fixiert). Bei einer Stützlagerung der Antriebswelle in einem konzentrischen Wälzlager wird die Position des Gehäuserings im Gehäuse längs zur Rotationsachse der Antriebswelle in diejenige Richtung festgelegt, die die an der Antriebswelle in deren Längsrichtung angreifende Kraft aufweist. Gleichzeitig wird die Position des Wellenrings auf der Antriebswelle in die Gegenrichtung festgelegt (eine weitergehende Verschiebung der Wellenscheibe auf der Antriebswelle in dieser Richtung gesperrt (blockiert)). Entsprechender Positionsfestlegungen in die jeweilige Gegenrichtung bedarf es nicht.

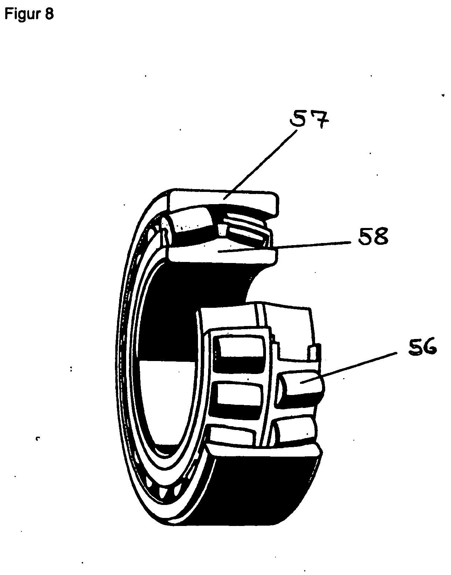

Als für das erfindungsgemäße Verfahren verwendbare konzentrische Wälzlager seien beispielhaft genannt das Rillenkugellager (DIN 625; es eignet sich zur Ausführung einer Lagerung zur Aufnahme einer in ersten Linie radialen Belastung), das einreihige Schrägkugellager (DIN 628; es eignet sich zur Ausführung einer Lagerung, die sowohl eine hohe einseitige achsiale als auch eine hohe radiale Belastung aufzunehmen vermag (eine Stützlagerung)), das zweireihige Schrägkugellager (es entspricht zwei einreihigen Schrägkugellagern in O-Anordnung und eignet sich zur Ausführung von Lagerungen zur Aufnahme von radialer und beidseitiger achsialer Belastung (Führungslagerung)), das Pendelkugellager (DIN 630; es besitzt zwei Kugelreihen und eignet sich zur Ausführung von Lagerungen zur Aufnahme von radialer und beidseitiger achsialer Belastung (Führungslagerung)), das Zylinderrollenlager (DIN 5412; es eignet sich zur Ausführung von Lagerungen zur Aufnahme einer in erster Linie radialen Belastung), das Kegelrollenlager (DIN 720; es eignet sich zur Ausführung von Lagerungen zur Aufnahme von radialer und einseitig achsialer Belastung (Stützlagerung)) und das Pendelrollenlager (DIN 635; Pendelrollenlager (vgl. Figur 8) haben zwei Rollenreihen mit einer gemeinsamen hohlkugeligen Laufbahn im Außenring; der Innenring hat zwei zur Lagerachse geneigte Laufbahnen; sie sind winkelbeweglich und dadurch unempfindlich gegen Schiefstellungen der Welle zum Gehäuse bzw. Durchbiegungen der Welle; sie können außer Radialbelastungen bei entsprechender Fixierung (Ausführung) zusätzlich Achsialbelastungen in nur einer (Stützlagerung) oder in beide Längsrichtungen (Führungslagerung) aufnehmen).

Da Lagerungen in konzentrischen Lagern in der Regel so ausgeführt werden können, dass sie sowohl Radial- als auch Achsialbelastungen aufzunehmen vermögen, weisen Bezeichnungen für konzentrische Lager weder das Präfix "Radial-" noch das Präfix "Achsial-" auf.

Die Fixierung der Lagerpartner zur Festlegung ihrer Position in eine oder in beide Längsrichtungen im Gehäuse bzw. auf der Antriebswelle kann sowohl durch kraftschlüssige, formschlüssige und/oder stoffschlüssige Verbindung erfolgen. Als Mittel zum Befestigen (Fixieren) im Gehäuse kommen z. B. Deckel, Stützscheibe, Gewindering, Gehäuseschulter, Abstandshüls und Sicherungsring in Betracht. Beispiele für Mittel zum Befestigen (Fixieren) auf der Welle sind Sicherungsring oder Nutenring (z. B. Seegerring), Wellenmutter, Abstandshülse, Abstandsring, Übermaßpassung, Spannhülse, Anlaufbund (Schulter), Spannschraube, Mutter und Scheibe mit Zentralschraube am Wellenende. Beispielsweise kann der Innenring auf der Welle zwischen einem Anlaufbund und einer Spannschraube oder einer Mutter eingespannt oder mit einer Spannhülse gepresst werden. Im Gehäuse wird oft der Außenring mit dem Deckel gegen einen Anlaufbund gepresst oder mit einem Seegerring gehalten. Beim Verfahren des Aufschrumpfens wird das Lager auf hohe Temperaturen gebracht. Dadurch dehnt sich das ganze Lager aus und wird im erhitzten Zustand über die kalte Welle geschoben. Beim Abkühlen zieht es sich zusammen und sitzt extrem fest auf der Welle. Grundsätzlich können auch Klebeverbindungen angewendet werden. Selbstverständlich kann die Fixierung auch durch Aufpressen vorgenommen werden.

Detaillierte Informationen zur Ausführung von Lagerungen von Wellen in Gleit- und Wälzlagern finden sich z. B. in Dubbel, Taschenbuch für den Maschinenbau, 21. Auflage, K-H. Grote und J. Feldhusen, Springer Verlag (2005) sowie im SKF Hauptkatalog der SKF GmbH Mannheim (1986) und auf der www.skf.com.

Wie bereits erwähnt, sind erfindungsgemäß für die Lagerung der Antriebswelle zu verwendende Lager im Handel käuflich zu erwerben und so auszuwählen, dass sie der Höhe ihrer erwarteten Belastung auch im Langzeitbetrieb (in der Regel wenigstens 1000 bzw. wenigstens 2000 Betriebsstunden) standzuhalten vermögen. Qualitativ hochwertige Lager besitzen Lebensdauern von bis zu 100 000 Betriebsstunden und mehr.

Die erfindungsgemäße Verfahrensweise ist insbesondere für solche reinigenden Waschkolonnentrennverfahren relevant, bei denen diejenige Lagerung in den wenigstens zwei Lagern, die die an der Antriebswelle in deren Längsrichtung nach unten gerichtet angreifende Kraft aufnimmt (einschließlich des für diese Lagerung verwendeten Lagers), so ausgelegt (ausgeführt) ist, dass sie an der Antriebswelle in deren Längsrichtung nach unten gerichtet angreifende Kräfte aufzunehmen vermag, die ≥ 50 kN, oder ≥ 75 kN, oder ≥ 100 kN, oder ≥ 1000 kN betragen. In der Regel erfolgt die Ausführung (die Auslegung) aus Sicherheitsgründen so, dass die installierte Belastbarkeit über die für die verschiedenen möglichen Betriebszustände vermutete (erwartete) Höchstbelastung gelegt wird. In der Regel wird die vorstehende Belastungsauslegung beim erfindungsgemäßen Verfahren jedoch 20 000 kN, häufig 10 000 kN nicht über-steigen (ein Überlastungsbruch tritt in der Regel im Lager und nicht an der Fixierung der Lagerpartner ein).

Damit ist das erfindungsgemäße Verfahren nicht zuletzt dann von Bedeutung, wenn der maximale Durchmesser der Antriebswelle in ihrem zwischen der Abtrageinrichtung und demjenigen Lager, in welchem die Lagerung der Antriebswelle so ausgeführt ist, dass sie die an der Antriebswelle in deren Längsrichtung nach unten gerichtet angreifende Kraft aufnimmt, gelegenen Längenbereich (Längsabschnitt) im Bereich von 50 mm bis 400 mm, oder im Bereich von 100 bis 300 mm, oder im Bereich von 150 mm bis 250 mm liegt. Dies vor allem dann, wenn sowohl die Antriebswelle als auch die Abtrageinrichtung aus Stahl (z. B. Edelstahl) gefertigt sind. Die Festlegung des vorgenannten Durchmessers wird normalerweise mit der erwarteten Belastung korrelierend gestaltet (je größer die erwartete Belastung, desto größer der Durchmesser).

Eine Ausführungsform des erfindungsgemäßen Verfahrens kann nun z. B. darin bestehen, dass diejenige Lagerung, die in ihrem Lager so ausgeführt ist, dass sie die an der Antriebswelle in deren Längsrichtung nach unten gerichtet angreifende Kraft aufnimmt, als Führungslagerung ausgeführt ist. D. h., als eine Lagerung, die so ausgeführt ist, dass sie sowohl die an der Antriebswelle in deren Längsrichtung nach unten gerichtet angreifende Kraft, als auch eine an der Antriebswelle in deren Längsrichtung nach oben gerichtet angreifende Kraft und zusätzlich noch die im Lager von der Antriebswelle radial nach außen wirkenden Kräfte aufnimmt. Eine solche Führungslagerung kann z. B. in einem zweiseitigen Schrägkugellager, in einem Pendelkugellager, oder in einem Pendelrollenlager ausgeführt werden. Darüber hinaus bedarf es zur Durchführung des erfindungsgemäßen Verfahrens dann nur noch der Lagerung der Antriebswelle in einem weiteren Lager, wobei diese Lagerung als reine Radiallagerung auszuführen ist, d. h. so, dass sie nur die von der Antriebswelle in diesem Lager radial nach außen wirkenden Kräfte aufnimmt. Erfindungsgemäß zweckmäßig kommt für eine solche alleinige Radiallagerung ein Rillenkugellager oder ein Pendelrollenlager in Betracht. Von oben nach unten betrachtet würde man erfindungsgemäß vorteilhaft unterhalb der Abtrageinrichtung zunächst die Radiallagerung und unterhalb derselben die Führungslagerung ausführen. Selbstverständlich kann die eine reine Radiallagerung in der vorstehend beschriebenen erfindungsgemäßen Ausführungsform bei Bedarf durch zusätzliche weitere alleinige Radiallagerungen ergänzt werden.

Erfindungsgemäß bevorzugt ist es jedoch, mehrere verschiedene einzubeziehende Belastungen nicht in einem einzelnen Lager aufzunehmen, wie dies im Fall einer Führungslagerung der Fall ist, sondern die Aufnahme dieser Belastungen auf mehrere Lager zu verteilen. Dies gilt insbesondere dann, wenn einzelne erwartete Belastungen sehr groß sind (z. B. beim erfindungsgemäßen Verfahren die an der Antriebswelle in deren Längsrichtung nach unten gerichtet angreifende Kraft). In diesem Fall kann man die jeweilige Lagerung auf die erwartete jeweilige aufzunehmende Belastung maßgeschneidert ausführen.

Eine alternative verbesserte Ausführungsform des erfindungsgemäßen Verfahrens besteht daher z. B. darin, dass diejenige Lagerung, die in ihrem Lager so ausgeführt ist, dass sie die an der Antriebswelle in deren Längsrichtung nach unten gerichtet angreifende Kraft aufnimmt, nur als Stützlagerung ausgeführt ist.

D. h., als eine Lagerung, die so ausgeführt ist, dass sie nur die in der Antriebswelle in deren Längsrichtung nach unten gerichtet angreifende Kraft und zusätzlich noch die im Lager von der Antriebswelle radial nach außen wirkenden Kräfte aufnimmt. Eine solche Stützlagerung kann z. B. erfindungsgemäß vorteilhaft in einem Achsial-Pendelrollenlager ausgeführt werden. Darüber hinaus bedarf es zur Durchführung der erfindungsgemäßen Verfahrensweise dann noch wenigstens der Lagerung der Antriebswelle in einem weiteren Lager, wobei diese Lagerung ebenfalls als Stützlagerung ausgeführt sein kann, und zwar so, dass sie zum einen eine an der Antriebswelle in deren Längsrichtung nach oben gerichtet angreifende Kraft und zusätzlich noch die in diesem Lager von der Antriebswelle radial nach außen wirkenden Kräfte aufnimmt. Erfindungsgemäß vorteilhaft wird man diese Lagerung in einem Pendelrollenlager ausführen. Selbstverständlich können die beiden vorstehenden Lagerungen bei Bedarf durch zusätzliche alleinige Radiallagerungen ergänzt werden (diese können beispielsweise ebenfalls in einem Pendelrollenlager ausgeführt sein). Von oben nach unten betrachtet würde man erfindungsgemäß bevorzugt unterhalb der Abtrageinrichtung zunächst die Radiallagerung, daran anschließend die erste Stützlagerung für eine auf der Antriebswelle in deren Längsrichtung nach oben gerichtet angreifende Kraft und
abschließend die zweite Stützlagerung für die an der Antriebswelle in deren Längsrichtung nach unten gerichtet angreifende Kraft ausführen. Mit Vorteil beträgt der lichte Abstand der beiden Stützlagerungen dabei nicht mehr als 150 cm, besser nicht mehr als 100 cm und vorzugsweise nicht mehr als 50 cm. In der Regel wird der vorgenannte lichte Abstand jedoch wenigstens 10 cm betragen. Vorstehende Ausführungsform ist insbesondere dann vorteilhaft, wenn als Dichtung eine doppelt wirkende achsiale Gleitringdichtung verwendet wird, da die zusätzliche Radiallagerung, die vorzugsweise möglichst in Nähe der Abtrageinrichtung ausgeführt wird, einem möglichen Versatz der jeweiligen beiden Gleitringe besonders effizient entgegenwirkt. Selbstverständlich umfasst vorliegende Erfindung aber auch solche Ausführungsformen, bei denen anstelle der einen und/oder der anderen Stürzlagerung jeweils eine Kombination aus einer einseitigen Achslallagerung und einer Radiallagerung (die in zwei eigenständigen Lagern ausgeführt sind) angewendet wird.

Insgesamt ermöglicht die erfindungsgemäße Lagerung der Antriebswelle in bedarfsgerechter Weise eine möglichst reibungsfreie Rotation der Antriebswelle um ihre Längsachse, bei gleichzeitig definierter Position im Raum und damit auch im Langzeitbetrieb des erfindungsgemäßen Verfahren eine störungsfreie Verfahrensausübung. Dies gilt insbesondere dann, wenn diejenige Lagerung, die in einem der Lager so ausgeführt ist, dass sie eine an der Antriebswelle in deren Längsrichtung nach oben gerichtet angreifende Kraft aufnimmt, einschließlich des zugehörigen Lagers, eine In achsialer Richtung der Antriebswelle nach oben gerichtet angreifende Kraft aufzunehmen vermag, die ≥ 75 kN, oder ≥ 100 kN, oder ≥ 1000 kN (in der Regel ≤ 20 000 kN, oder ≤ 10 000 kN) beträgt.

In achsialer Richtung sind beim erfindungsgemäßen Verfahren mitverwendete Lager bevorzugt unterhalb der Dichtung montiert, was verhindert, dass sie im Verfahrensbetrieb mit der Kristallschmelze oder mit der Kristallsuspension in Berührung kommen. Erfindungsgemäß mitzuverwendende Lager sind vorzugsweise aus Lageredelstahl gefertigt.

Unter anderem aus Gründen einer Veränderung der Materlalausdehnung mit der Temperatur (insbesondere dann, wenn im Rahmen des erfindungsgemäßen Verfahrens die Aufnahme der an der Antriebswelle in deren Längsrichtung nach unten gerichtet angreifende Kraft in einem anderen Lager erfolgt, als die Aufnahme einer an der Antriebswelle in deren Längsrichtung nach oben gerichtet angreifenden Kraft) wird die erfindungsgemäße Lagerung in jenem Lager, das eine an der Antriebswelle in deren Längsrichtung nach oben gerichtet angreifende Kraft aufnimmt, anwendungstechnisch zweckmäßig häufig so ausgeführt, dass die Kraftaufnahme nicht unmittelbar bei Krafteinwirkung erfolgt, sondern erst nach einer begrenzten, durch die Krafteinwirkung bedingten Bewegung der Antriebswelle und der an ihr befestigten Bauteile In der entsprechenden Längsrichtung. Ein solches Längsspiel der Lagerung kann z. B. ≤ 10 cm, besser ≤ 5 cm, vorteilhaft ≤ 1,5 cm und besonders vorteilhaft ≤ 1,0 cm oder ≤ 0,5 mm betragen. Insbesondere im Fall einer Mitverwendung einer doppelt wirkenden achsialen Gleitringdichtung wird das beschriebene Längsspiel so klein wie möglich gehalten.

Im Übrigen haben alle in dieser Schrift hinsichtlich der Durchführung eines Waschkolonnenabtrennverfahrens mit erzwungenem Transport des Kristallbetts getroffenen Aussagen auch für die erfindungsgemäße Verfahrensweise Gültigkeit.

D. h., auch beim erfindungsgemäßen Verfahren ist α vorzugsweise ≤ 10°, besser ≤ 5° und besonders bevorzugt 0°. Ferner ist beim erfindungsgemäßen Verfahren auch β vorzugsweise ≤ 10°, besser ≤ 5° und besonders bevorzugt 0°.

Der Gehalt der beim erfindungsgemäßen Verfahren in den Prozessraum der Waschkolonne geführten Kristallsuspension an der chemischen Zielverbindung wird häufig ≥ 60 Gew.-%, oder ≥ 70 Gew.-%, oder ≥ 80 Gew.-%, oder ≥ 90 Gew.-%, oder ≥ 95 Gew.-% betragen (in natürlicher Weise beträgt er < 100 Gew.-%, meist ≤ 98 Gew.-%). Besonders relevant ist das erfindungsgemäße Verfahren dann, wenn der Kristallisationsgrad der beim erfindungsgemäßen Verfahren in den Prozessraum der Waschkolonne geführten Kristallsuspension ≥ 0,10, oder ≥ 0,20, oder ≥ 0,25 beträgt. In der Regel wird der vorgenannte Kristallisationsgrad beim erfindungsgemäßen Verfahren ≤ 0,60, häufig ≤ 0,50 und teilweise ≤ 0,40 betragen. Erfindungsgemäß relevante Kristallisationsgrade sind somit z.B. auch diejenigen im Bereich 0,2 bis 0,3.

Alles bisher in dieser Schrift gesagte ist insbesondere dann zutreffend, wenn die chemische Zielverbindung eine Verbindung aus der Gruppe bestehend aus Acrylsäure, Methacrylsäure, N-Vinylpyrrolidon und p-Xylol ist.

Dies gilt vor allem dann, wenn die beim erfindungsgemäßen Verfahren dem Prozessraum der Waschkolonne zugeführte Kristallsuspension ≥ 65 Gew.-% Acrylsäure und 0,1 bis 30 Gew.-% Wasser enthält. Es gilt aber auch dann, wenn die vorgenannte Kristallsuspension ≥ 80 Gew.-% Acrylsäure und 0,5 bis 15 Gew.-% Wasser, oder ≥ 90 Gew.-Acrylsäure und 0,7 bis 9 Gew.-% Wasser enthält (die chemische Zielverbindung ist jeweils Acrylsäure). Dies gilt nicht zuletzt deshalb, weil Wasser ein vergleichsweise kleines Molekulargewicht aufweist. Ein fluktuierender Wassergehalt wirkt sich daher auf T^{SP} und daraus resultierend auf ΔT^{S} spürbar aus (vgl. z. B. DE-A 102007043758).

D. h., das erfindungsgemäße Verfahren ist z. B. dann anwendbar, wenn Acrylsäure die chemische Zielverbindung ist, und die dem Prozessraum zugeführte Kristallsuspension die nachfolgenden Gehalte aufweist:

| | |
|---|---|
| ≥ 70 Gew.-% | Acrylsäure, |
| bis zu 20 Gew.-% | Wasser, |
| bis zu 15 Gew.-% | Essigsäure, |
| bis zu 5 Gew.-% | Propionsäure, |
| bis zu 5 Gew.-% | Aldehyde, |
| bis zu 3 Gew.-% | Polymerisationsinhibitoren und |
| bis zu 5 Gew.-% | Acrylsäure-Oligomere (Michael-Addukte). |

Es ist aber auch dann anwendbar, wenn Acrylsäure die Zielverbindung ist, und die dem Prozessraum zugeführte Kristallsuspension die nachfolgenden Gehalte aufweist:

| | |
|---|---|
| 90 bis 98 Gew.-% | Acrylsäure, |
| 0,2 bis 5 Gew.-% | Wasser, |
| 0,001 bis 3 Gew.-% | Acrolein, |
| 0,001 bis 3 Gew.-% | Methacrolein, |
| 0,001 bis 3 Gew.-% | Propionsäure, |
| 0,001 bis 3 Gew.-% | von Acrolein und Methacrolein verschiedene Aldehyde, und |
| 0,001 bis 3 Gew.-% | Maleinsäure. |

Alles in dieser Schrift gesagte gilt insbesondere dann, wenn die Längstausdehnung der Kristalle (die längste geradlinige Direktverbindung zweier auf der Kristalloberfläche befindlicher Punkte) mehrheitlich (mehr als die numerische Hälfte aller Kristalle) 50 bis 1 500 µm bzw. 200 bis 800 µm beträgt.

Nicht zuletzt gelten alle Ausführungen in dieser Schrift dann, wenn ΔT^{S} im Normalbetrieb des erfindungsgemäßen Verfahrens 5 bis 15 °C beträgt. ΔT^{S} kann aber auch 1 bis 20 °C oder 5 bis 10 °C betragen.

Anwendungstechnisch zweckmäßig ist die Abtrageinrichtung beim erfindungsgemäßen Verfahren als Messerscheibe ausgebildet. Vorzugsweise ist diese (kreis)rund. Als den Prozessraum mit dem Kristallschmelzeraum verbindende Passagen für die vom Kristallbett abgetragenen Kristalle weist sie Schlitze (Durchgangsöffnungen) auf, an deren Rand (die von der Rotationsrichtung abgewandte Umrisslinienseite des Schlitzes (z.B. des Langlochs)) die Messer angeordnet sind. Die Schlitze mit den Messern sind über die Messerscheibe vorzugsweise so verteilt, dass über das gesamte der Messerscheibe zugewandte Ende des Kristallbetts Kristalle abgetragen werden, wenn die Messerscheibe rotiert. Mit Vorteil sind die Schlitze radial ausgerichtet und jeder Schlitz ist mit einer schräg sitzenden Klinge (einem schräg sitzenden Messer) bestückt, mit der die Kristalle vom Kristallbett abgetragen werden. Die Verteilung der Schlitze über die Messerscheibe ist bevorzugt außerdem so gestaltet, dass bei einer Umdrehung der Messerscheibe durch jeden Schlitz im Wesentlichen der gleiche Massenstrom an Kristallen strömt. Das jeweilige Messer (die jeweilige Klinge) ragt über die dem Kristallbett zugewandte Oberfläche (eine gegebenenfalls bestehende Profilierung derselben bleibt dabei unberücksichtigt, d.h., Bezugspunkt ist der höchste Punkt der Profilierung) hinaus (in typischer Weise 1 bis 15 mm, oft 2 bis 10 mm, oder 3 bis 5 mm), so dass von der Klinge Kristalle abgetragen und der Schlitzöffnung zugeführt werden.

Der Radius von erfindungsgemäß geeigneten Messerscheiben kann für großtechnische Verfahren z. B. 300 bis 3000 mm betragen. Vorgenannte Schlitze weisen häufig eine Langlochgeometrie auf (die Definition eines Langlochs findet sich z. B. in der DE-A 102007028333 und in der DE-A 102007028332). Die Schlitzgeometrie kann aber auch rechteckig sein, oder zwischen derjenigen eines Langlochs und derjenigen eines Rechtecks liegen.

Der Lochdurchmesser (Abstand der beiden Längskanten) kann z. B. 20 bis 100 mm (typisch 50 bis 70 mm) und der Abstand der beiden Lochzentren 100 bis 500 mm betragen. Die dem Kristallbett zugewandte Oberfläche der Messerscheibe ist anwendungstechnisch zweckmäßig außerdem mit einem Profil aus konzentrischen Rillen versehen (der Rillenquerschnitt ist vorteilhaft dreieckig; die Rillentiefe kann z. B. 2 bis 10 mm, oder 3 bis 7 mm betragen, die Rillenweite 10 bis 15 mm und der Abstand von in radialer Richtung aufeinanderfolgender Rillen so bemessen sein, dass die zugehörigen Dreiecksquerschnitte gemeinsame Eckpunkte haben). Die Profilierung gewährleistet eine möglichst gleichmäßige Verteilung der aus dem Waschschmelzeraum in den Prozessraum rückströmenden Waschschmelze über den Querschnitt des Prozessraums. Die Figuren 5 und 8 der EP-A 1448282 zeigen beispielhafte Ausgestaltungen einer erfindungsgemäß als Abtrageinrichtung geeigneten Messerscheibe. Der Winkel γ, den die Fläche der Abtragelemente der Abtrageinrichtung (z. B. die Abtragklingen bzw. die Abtragmesser) und die Rotationsachse der Antriebswelle einschließen, beträgt beim erfindungsgemäßen Verfahren (wie bereits gesagt) häufig 20° bis 70°, und vielfach 30° bis 60°. Die Antriebswelle ragt beim erfindungsgemäßen Verfahren von unten kommend anwendungstechnisch vorteilhaft bis zur Messerscheibe (bzw. generell bis zur Abtrageinrichtung). Von der Antriebswelle radial weglaufende, mit Lochöffnungen ausgerüstete Lamellen (Stege) tragen (stützen) die Messerscheibe anwendungstechnisch zweckmäßig. Selbstverständlich kann die rotierende Abtrageinrichtung auch wie in der WO 2009/148314 beschrieben ausgestaltet sein. Im Übrigen kann das erfindungsgemäße Verfahren wie im in dieser Schrift referierten Stand der Technik ausgeführt werden. Dazu gehören insbesondere die EP-B 1448282, die WO 01/77056, die deutsche Anmeldung Nr. 102008040340.7, die WO 2006/111565, die WO 2009/148314 und die DE-A 102007004960.

Typische Kristallmassenzufuhrströme (insbesondere im Fall von Acrylsäurekristallen) betragen, bezogen auf die Querschnittsfläche des Prozessraums an dessen Zufuhr-Ende, beim erfindungsgemäßen Verfahren 1 bis 20 t/m²·h (t = metrische Tonne). Die Drehzahl der Antriebswelle liegt typisch im Bereich von 2 bis 40, häufig 4 bis 20 und oft 4 bis 10 pro Minute. Die Länge der Antriebswelle beträgt insbesondere für großtechnische Verfahren 0,5 bis 4 m.

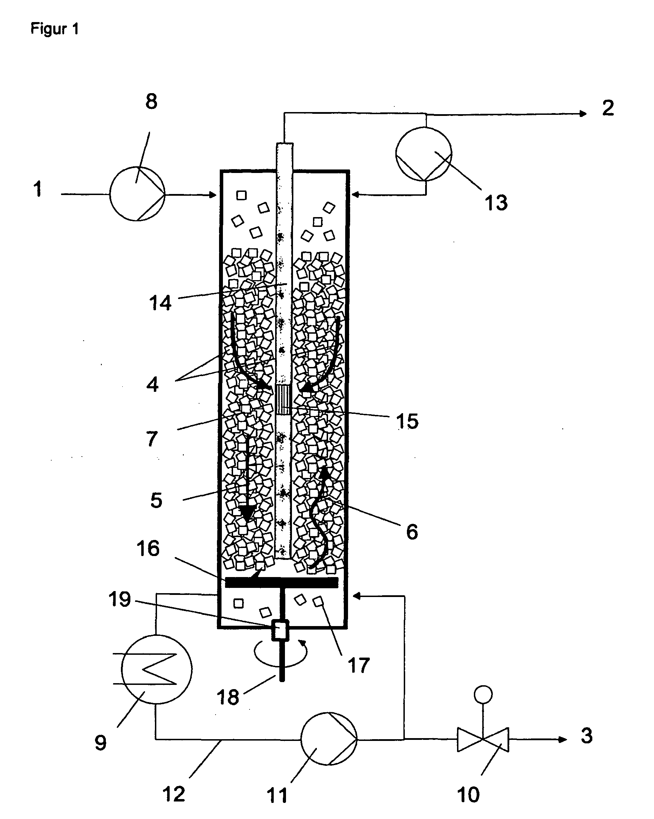

Figur 1 zeigt im Längsschnitt schematisch das Funktionsprinzip einer hydraulischen Waschkolonne ohne Verteilerraum. Dabei kommen den numerischen Adressen folgende Bedeutungen zu:
1: Suspension der Kristalle der chemischen Zielverbindung in Mutterlauge;
2: aus dem Prozessraum abgegebener Mutterlaugestrom;
3: Auslass für den Reinschmelzestrom der chemischen Zielverbindung;
4: den Förderdruck erzeugende strömende Mutterlauge;
5: von oben nach unten gefördertes Kristallbett;
6: von unten nach oben strömende Waschschmelze;
7: Prozessraum der Waschkolonne;
8: Förderpumpe für die Kristallsuspension;
9: Aufschmelzer (z. B. Wärmeübertrager) zum Aufschmelzen der abgetragenen Kristalle im Schmelzkreis);
10: Regelventil zum Einstellen der Stärke des Waschschmelzestroms;
11: Schmelzkreispumpe;
12: Schmelzkreis;
13: Pumpe für als Steuerstrom rückgeführte Mutterlauge;
14: Filterrohr (großtechnisch wird ein Bündel von Filterrohren eingesetzt (vgl. z. B. Figur 3 der EP-A 1448282);
15: im Filterrohr integrierter Filter;
16: rotierende Abtrageinrichtung (z. B. Messerscheibe);
17: Kristallschmelzeraum;
18: Antriebswelle;
19: Dichtung.

Figur 2 zeigt im Längsschnitt schematisch das Funktionsprinzip einer mechanischen Waschkolonne ohne Verteilerraum, die als mechanische Zwangsfördereinrichtung einen oszillierenden Kolben mit filtrierender Stirnfläche und Mutterlaugeabfuhr einsetzt.

Numerisch identische Adressen haben die gleiche Bedeutung wie in Figur 1. Zusätzlich kommt den beiden nachfolgenden numerischen Adressen in Figur 2 die folgende Bedeutung zu:
20: oszillierender Kolben mit filtrierender Stirnfläche;
21: aus dem Prozessraum abzugebende Mutterlauge.

Figur 3 zeigt im Längsschnitt schematisch das Funktionsprinzip einer mechanischen Waschkolonne ohne Verteilerraum, mit einem rotierenden Förderelement zur mechanischen Zwangsförderung. Zusätzlich zu den bereits in den Figuren 1 und 2 mit identischer Bedeutung verwendeten numerischen Adressen kommen den nachfolgenden neuen numerischen Adressen in Figur 3 die folgenden Bedeutungen zu:
22: zentraler Verdrängungskörper gemäß EP-B 1448282 zur Gewährleistung eines homogeneren Kristallbetts;
23: rotierendes Förderelement;
24: Filter.

Figur 4 zeigt im Längsschnitt schematisch das Funktionsprinzip einer hydraulischen Waschkolonne mit dem Prozessraum vorgelagertem Verteilerraum. Zusätzlich zu den bereits in den Figuren 1, 2 und 3 mit identischer Bedeutung verwendeten numerischen Adressen kommen den nachfolgenden neuen numerischen Adressen in Figur 4 die folgenden Bedeutungen zu:
25: Aufbaufront;
26: Verteilerboden für die Suspension der Kristalle;
27: Sammelboden für die Mutterlaugeabfuhr.

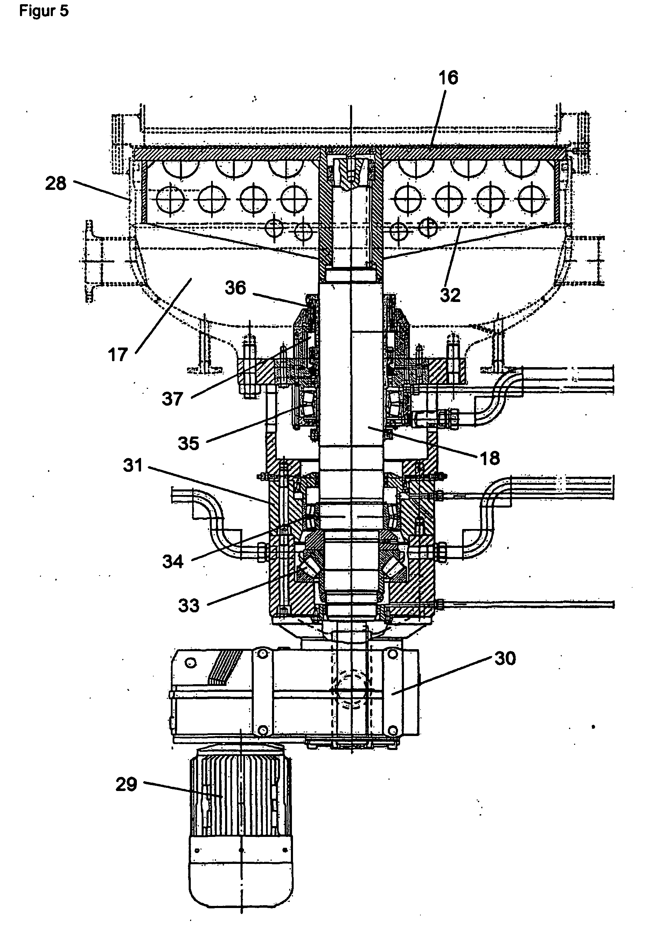

Figur 5 zeigt einen Ausschnitt einer zur Durchführung eines erfindungsgemäßen Verfahrens geeigneten Waschvorrichtung. Zusätzlich zu den bereits in den Figuren 1 bis 4 mit identischer Bedeutung verwendeten numerischen Adressen kommen den nachfolgenden neuen numerischen Adressen in Figur 5 die folgenden Bedeutungen zu:
28: Wand der Waschkolonne;
29: Elektromotor mit Getriebe zum Antreiben der Rotationsbewegung der Antriebswelle;
30: Kupplung zur Übertragung des Drehmoments auf die Antriebswelle; das Gewicht von Kupplung und Motor wirkt im Normalfall nicht auf die Antriebswelle, da sie in der Regel separat gehalten werden;
31: die Antriebswelle umgebendes Gehäuse (ortsfeste Basis), das aus mehreren miteinander verschraubten Teilen besteht und das mit dem Waschkolonnenkörper verschraubt ist;
32: Lamellen, die die Abtrageinrichtung (eine geschlitzte Messescheibe) stützen;
33: Stützlagerung der Antriebswelle in einem Achsial-Pendelrollenlager zur Aufnahme einer an der Antriebswelle in deren Längsrichtung nach unten gerichtet angreifenden Kraft;
34: Stützlagerung der Antriebswelle in einem Pendelrollenlager zur Aufnahme einer an der Antriebswelle in deren Längsrichtung nach oben gerichtet angreifenden Kraft;
35: Radiallagerung der Antriebswelle in einem Pendelrollenlager;
36: in der Kristallschmelze stehendes oberes Gleitringpaar der doppelt wirkenden achsialen Gleitringdichtung;
37: mit Sperrflüssigkeit gefüllter Sperrraum der doppelt wirkenden achsialen Gleitringdichtung;

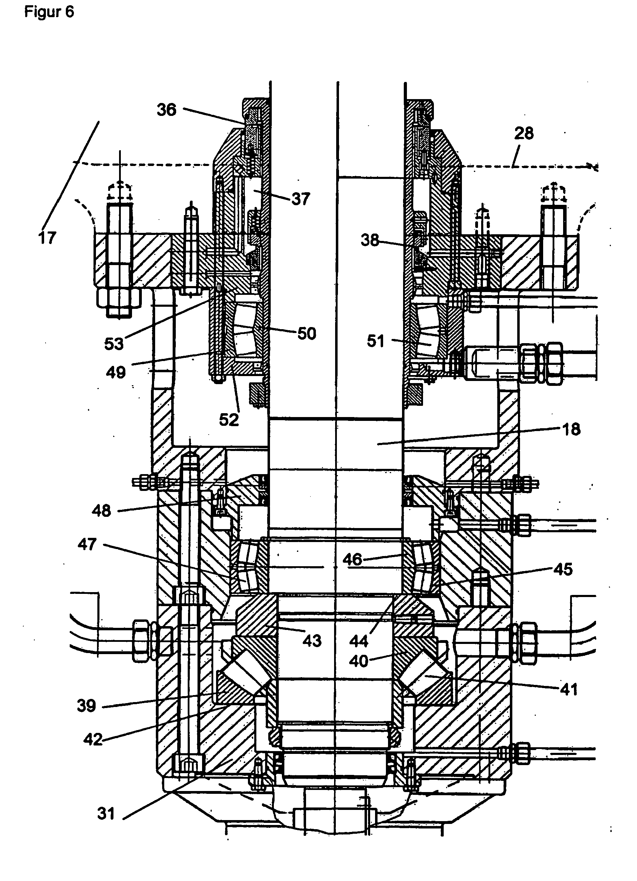

Figur 6 zeigt den mit Blick auf die vorliegende Erfindung besonders relevanten Abschnitt der in Figur 5 abgebildeten Waschvorrichtung in vergrößerter Form. Zusätzlich zu den bereits in den Figuren 1 bis 5 mit identischer Bedeutung verwendeten numerischen Adressen kommen den nachfolgenden neuen numerischen Adressen in Figur 6 die folgenden Bedeutungen zu:
38: unteres Gleitringpaar der doppelt wirkenden achsialen Gleitringdichtung;
39: Gehäusescheibe des Achsial-Pendelrollenlagers;
40: Wellenscheibe des Achsial-Pendelrollenlagers;
41: Wälzkörper des Achsial-Pendelrollenlagers (das Achsial-Pendelrollenlager zur Ausführung der Stützlagerung der Antriebswelle, die die an der Antriebswelle in deren Längsrichtung nach unten gerichtet angreifende Kraft aufnimmt, ist vorzugsweise ein Achsial-Pendelrollenlager 29438 E der SKF GmbH in D-68219 Mannheim; die damit resultierende achsiale Belastbarkeit (wie immer in dieser Schrift als dynamische Tragzahl) liegt bei ca. 2850 kN);
42: Gehäuseschulter (Absatz im unteren Gehäuseteil), die die Position der Gehäusescheibe des Achsial-Pendelrollenlagers im Gehäuse längs zur Rotationsachse der Antriebswelle nach unten festlegt; eine entsprechende Positionsfestlegung der Gehäusescheibe nach oben besteht nicht;
43: Abstandsring, der zusammen mit dem darüber befindlichen Anlaufbund 44 (Absatz auf der Antriebswelle) die Position der Wellenscheibe auf der Antriebswelle nach oben festgelegt; eine entsprechende Positionsfestlegung der Wellenscheibe nach unten besteht nicht;
44: Absatz auf der Antriebswelle (Anlaufbund);
45: Außenring des ersten Pendelrollenlagers (erster Gehäusering);
46: Innenring des ersten Pendelrollenlagers (erster Wellenring);
47: Wälzkörper des ersten Pendelrollenlagers (das erste Pendelrollenlager zur Ausführung der Stützlagerung der Antriebswelle, die eine an der Antriebswelle in deren Längsrichtung nach oben angreifende Kraft aufnimmt, ist vorzugsweise ein Pendelrollenlager 23044 CC/W33 der SKF GmbH in D-68219 Mannheim; die damit resultierende achsiale Belastbarkeit liegt bei ca. 290 kN (dynamische Tragzahl); die radiale dynamische Tragzahl liegt bei ca. 1220 kN);
48: mit dem Gehäuse verschraubte Stützscheibe, die die Position des ersten Gehäuserings im Gehäuse längs zur Rotationsachse der Antriebswelle nach oben festlegt; eine entsprechende Positionsfestlegung des ersten Außenrings (ersten Gehäuserings) nach unten besteht nicht; die Position des ersten Wellenrings (ersten Innenrings) auf der Antriebswelle ist nach unten durch den Abstandsring 43 festgelegt; eine entsprechende Positionsfestlegung des ersten Wellenrings nach oben besteht nicht;
49: Außenring des zweiten Pendelrollenlagers (zweiter Gehäusering);
50: Innenring des zweiten Pendelrollenlagers (zweiter Wellenring);
51: Wälzkörper des zweiten Pendelrollenlagers (das zweite Pendelrollenlager zur Ausführung der Radiallagerung der Antriebswelle in unmittelbarer Nähe der doppelt wirkenden achsialen Gleitringdichtung ist vorzugsweise ein Pendelrollenlager 23048.C3 der SKF GmbH in D-68219 Mannheim; die radiale dynamische Tragzahl liegt bei ca. 1130 kN);
52: mit dem Gehäuse verschraubte Stützscheibe, die die Position des zweiten Gehäuserings im Gehäuse längs zur Rotationsachse der Antriebswelle nach unten festlegt;
53: Gehäuseschulter (Absatz im oberen Gehäuseteil), die die Position des zweiten Gehäuserings im Gehäuse längs zur Rotationsachse der Antriebswelle nach oben festlegt;
   die Position des zweiten Wellenrings auf der Antriebswelle ist weder nach oben noch nach unten festgelegt, weshalb eine typische Loslagerung vorliegt.

Zusammengefasst zeigen die Figuren 5 und 6 beispielhaft eine bevorzugte erfindungsgemäße Lagerung der Antriebswelle für die Abtrageinrichtung der Waschkolonne. Insgesamt ist die Antriebswelle dabei in drei (3) Lagern um ihre Längsachse drehbar gelagert. Die Lagerung im von oben nach unten untersten Lager ist dabei als Stützlagerung ausgeführt, die sowohl die an der Antriebswelle in deren Längsrichtung nach unten gerichtet angreifende Kraft, als auch die von der Antriebswelle im Achsial-Pendelrollenlager radial nach außen wirkenden Kräfte aufnimmt. Die Lagerung im von oben nach unten obersten Lager ist als Radiallagerung ausgeführt, die lediglich die von der Antriebswelle im obersten Pendelrollenlager radial nach außen wirkenden Kräfte aufnimmt. Die potentielle Möglichkeit des obersten der beiden Pendelrollenlager, auch zu einer Stütz- oder gar Führungslagerung der Antriebswelle herangezogen zu werden, wird bewusst nicht ausgeschöpft. Die im von oben nach unten mittleren Lager ist wieder als Stützlagerung ausgeführt, die sowohl eine an der Antriebswelle in deren Längsrichtung nach oben gerichtet angreifende Kraft, als auch die von der Antriebswelle im mittleren Pendelrollenlager radial nach außen wirkenden Kräfte aufnimmt.

Diese Ausgestaltung der erfindungsgemäßen Lagerung eignet sich insbesondere dann, wenn die Gewichtskraft GM der Gesamtmasse der Antriebswelle und aller an ihr befestigten mitrotierenden Bauteile der Waschkolonne wenigstens 3 kN bzw. wenigstens 5 kN, oder wenigstens 8 kN, oder wenigstens 10 kN, oder wenigstens 13 kN beträgt (normalerweise wird die Gewichtskraft GM ≤ 50 kN bzw. ≤ 40 kN, oder ≤ 30 kN betragen).

Dies wird in der Regel dann der Fall sein, wenn der maximale Durchmesser der Antriebswelle im Bereich vom Achsial-Pendelrollenlager bis zur doppelt wirkenden achsialen Gleitringdichtung 50 bis 400 mm oder 100 bis 300 mm beträgt, ihre Länge im Bereich von 1 bis 3 m liegt und die Antriebswelle selbst sowie die an ihr befestigten Bauteile im wesentlichen aus Edelstahl gefertigt sind und die Abtrageinrichtung eine kreisrunde rotierende geschlitzte Messerscheibe mit einem Durchmesser im Bereich von 300 bis 3000 mm ist.

Ganz besonders eignet sich die oben beschriebene erfindungsgemäße Ausführung der Lagerung der Antriebswelle dann, wenn zusätzlich die Kristallschmelze zu wenigstens 70 Gew.-%, vorzugsweise zu wenigstens 80 Gew.-%, oder zu wenigstens 90 Gew.-% aus Acrylsäure besteht und Acrylsäure die chemische Zielverbindung ist. Als doppelt wirkende achsiale Gleitringdichtung kommt dabei insbesondere eine Gleitringdichtung HSMR5L-D/250-E4 mit zusätzlicher Leckagebohrung der Firma Burgmann Industries/GmbH & Co in D-82502 Wolfratshausen in Betracht. Gleitring und Gegenring sind aus Buka 22 (SiC Q1 nach DIN 24960) gefertigt.

U.S. Provisional Patent Application No. 61/153339 eingereicht am 18. Februar 2009 ist eingefügt in die vorliegende Anmeldung durch Literaturhinweis.

Damit umfasst die vorliegende Anmeldung insbesondere die nachfolgenden erfindungsgemäßen Ausführungsformen:
1. Verfahren zum reinigenden Abtrennen einer chemischen Zielverbindung aus einer Suspension ihrer Kristalle in Mutterlauge, mit einer Waschvorrichtung, die als wenigstens ein Element eine aus verschiedenen Bauteilen bestehende Waschkolonne umfasst, die als ein erstes Bauteil eine ortsfest fixierte Wand aufweist, die einen zu seiner Längsachse rotationssymmetrischen Prozessraum und einen sich an diesen anschließenden Kristallschmelzeraum umhüllt, wobei der Einschlusswinkel α zwischen der Raumrichtung der Symmetrieachse und der Vertikalen nicht mehr als 20° beträgt und der Prozessraum durch die Wand der Waschkolonne und zwei auf der Symmetrieachse einander gegenüberliegende Enden begrenzt wird, von denen das auf der Symmetrieachse höher gelegene Ende das Zufuhr-Ende und das auf der Symmetrieachse tiefer gelegene Ende das Abtrag-Ende bildet, bei dem
   - am Zufuhr-Ende ein Strom der Suspension in den Prozessraum geführt wird,
   - unter Zurückhaltung der Kristalle und unter Ausbildung eines Kristallbetts im Prozessraum aus dem in den Prozessraum geführten Suspensionsstrom ein Mutterlaugestrom aus dem Prozessraum abgegeben wird,
   - als weiteres Bauteil der Waschkolonne in derselben am Abtrag-Ende des Prozessraums eine Abtrageinrichtung rotiert,
   - das Kristallbett im Prozessraum mit wenigstens einer von der Gravitation verschiedenen Kraft und parallel zur Symmetrieachse des Prozessraums auf die rotierende Abtrageinrichtung zu gefördert wird und dabei auf die Abtrageinrichtung stößt,
   - die rotierende Abtrageinrichtung vom auf sie stoßenden Kristallbett Kristalle abträgt,
   - der Strom der abgetragenen Kristalle durch die rotierende Abtrageinrichtung hindurch und/oder an der rotierenden Abtrageinrichtung vorbei in den sich in Förderrichtung des Kristallbetts hinter der Abtrageinrichtung an den Prozessraum anschließenden Kristallschmelzeraum der Waschkolonne fließt,
   - als weiteres Bauteil der Waschkolonne eine Antriebswelle, die von einem Antriebsaggregat zur Rotation um ihre Längsachse angetrieben wird, von unten durch einen in den Kristallschmelzeraum führenden Eingang hindurch in die Waschkolonne geführt ist, wobei der Einschlusswinkel β zwischen der Raumrichtung der Rotationsachse der Antriebswelle und der Raumrichtung der Symmetrieachse des Prozessraums bei keiner Projektion der beiden Raumrichtungen in eine Ebene mehr als 20° beträgt,
   - die Abtrageinrichtung an der Antriebswelle befestigt ist und die rotierende Antriebswelle das für die Rotation der Abtrageinrichtung erforderliche Drehmoment auf diese überträgt,
   - der in den Kristallschmelzeraum geförderte Kristallstrom im Kristallschmelzeraum und/oder in einem durch den Kristallschmelzeraum geführten Schmelzkreis durch Eintrag von Wärme zu einem Kristallschmelzestrom aufgeschmolzen wird,
   - der Eingang für die Antriebswelle in den Kristallschmelzeraum mit einer Dichtung ausgerüstet ist, die dem nicht beabsichtigten Austritt von Kristallschmelze aus dem Kristallschmelzeraum durch den Eingang in diesen hindurch entgegenwirkt,
   - bezogen auf die Stärke des vorgenannten Kristallschmelzestroms vom Kristallschmelzeraum ausgehend ein Teilstrom an Kristallschmelze als Waschschmelzestrom durch die rotierende Abtrageinrichtung hindurch und/oder an der rotierenden Abtrageinrichtung vorbei gegen die Bewegungsrichtung des Kristallbetts so in den Prozessraum geführt wird, dass sich im Kristallbett eine Waschfront ausbildet, die das Kristallbett in eine Mutterlaugenzone und in eine Waschschmelzezone aufteilt, und der restliche Teilstrom als Reinschmelzestrom der chemischen Zielverbindung seinem Auslass zugeführt wird,
   - die an der Antriebswelle in deren Längsrichtung im Normalbetrieb des Verfahrens angreifende Kraft stetig nach unten gerichtet ist,
   - die Antriebswelle in mehr als einem Lager um ihre Längsachse drehbar gelagert ist,
   - die Lagerung in einem der Lager so ausgeführt ist, dass die Lagerung in diesem Lager die an der Antriebswelle in deren Längsrichtung nach unten gerichtet angreifende Kraft aufnimmt, und
   - die Lagerung in wenigstens zwei Lagern so ausgeführt ist, dass die Lagerung in jedem dieser zwei Lager die von der Antriebswelle im jeweiligen der zwei Lager radial nach außen wirkenden Kräfte aufnimmt,
      dadurch gekennzeichnet, dass zusätzlich die Lagerung in einem der Lager so ausgeführt ist, dass Lagerung in diesem Lager eine an der Antriebswelle in deren Längsrichtung nach oben gerichtet angreifende Kraft aufzunehmen vermag
      und
   - diejenige Lagerung in den wenigstens zwei Lagern, die so ausgeführt ist, dass sie eine an der Antriebswelle in deren Längsrichtung nach oben gerichtet angreifende Kraft aufzunehmen vermag, so ausgeführt ist, dass sie an der Antriebswelle in deren Längsrichtung nach oben gerichtet angreifende Kräfte aufzunehmen vermag, die ≥ 50 kN betragen.
2. Verfahren gemäß Ausführungsform 1, dadurch gekennzeichnet, dass die Gewichtskraft der Gesamtmasse der Antriebswelle und aller an ihr befestigten mitrotierenden Bauteile ≥ 3 kN beträgt.
3. Verfahren gemäß Ausführungsform 1, dadurch gekennzeichnet, dass die Gewichtskraft der Gesamtmasse der Antriebswelle und aller an ihr befestigten mitrotierenden Bauteile ≥ 8 kN beträgt.
4. Verfahren gemäß Ausführungsform 1, dadurch gekennzeichnet, dass die Gewichtskraft der Gesamtmasse der Antriebswelle und aller an ihr befestigten mitrotierenden Bauteile ≥ 10 kN beträgt.
5. Verfahren gemäß einer der Ausführungsformen 1 bis 4, dadurch gekennzeichnet, dass die Gewichtskraft der Gesamtmasse der Antriebswelle und aller an ihr befestigten mitrotierenden Bauteile ≤ 50 kN beträgt.
6. Verfahren gemäß einer der Ausführungsformen 1 bis 4, dadurch gekennzeichnet, dass die Gewichtskraft der Gesamtmasse der Antriebswelle und aller an ihr befestigten mitrotierenden Bauteile ≤ 40 kN beträgt.
7. Verfahren gemäß einer der Ausführungsformen 1 bis 4, dadurch gekennzeichnet, dass die Gewichtskraft der Gesamtmasse der Antriebswelle und aller an ihr befestigten mitrotierenden Bauteile ≤ 30 KN beträgt.
8. Verfahren gemäß einer der Ausführungsformen 1 bis 7, dadurch gekennzeichnet, dass der Winkel α nicht mehr als 20° beträgt.
9. Verfahren gemäß einer der Ausführungsformen 1 bis 7, dadurch gekennzeichnet, dass der Winkel α nicht mehr als 5° beträgt.
10. Verfahren gemäß einer der Ausführungsformen 1 bis 7, dadurch gekennzeichnet, dass der Winkel α 0° beträgt.
11. Verfahren gemäß einer der Ausführungsformen 1 bis 10, dadurch gekennzeichnet, dass der Winkel β nicht mehr als 10° beträgt.
12. Verfahren gemäß einer der Ausführungsformen 1 bis 10, dadurch gekennzeichnet, dass der Winkel β nicht mehr als 5° beträgt.
13. Verfahren gemäß einer der Ausführungsformen 1 bis 10, dadurch gekennzeichnet, dass der Winkel β 0° beträgt.
14. Verfahren gemäß einer der Ausführungsformen 1 bis 13, dadurch gekennzeichnet, dass die Differenz zwischen der Temperatur T^{SCH} der Waschschmelze und der Temperatur T^{SP} der dem Prozessraum zugeführten Suspension 1 bis 25 °C beträgt.
15. Verfahren gemäß Ausführungsform 14, dadurch gekennzeichnet, dass T^{SCH} - T^{SP} 2 bis 20 °C beträgt.
16. Verfahren gemäß Ausführungsform 14, dadurch gekennzeichnet, dass T^{SCH} - T^{SP} 5 bis 15 °C beträgt.
17. Verfahren gemäß einer der Ausführungsformen 1 bis 16, dadurch gekennzeichnet, dass die Dichtung eine doppelt wirkende achsiale Gleitringdichtung ist.
18. Verfahren gemäß einer der Ausführungsformen 1 bis 17, dadurch gekennzeichnet, dass die Antriebswelle und die Abtrageinrichtung aus Werkstoffen gefertigt sind, deren Massendichte bei 25 °C und 1 atm ≥ 3 g/cm³ und ≥ 18 g/cm³ beträgt.
19. Verfahren gemäß Ausführungsform 18, dadurch gekennzeichnet, dass die Massendichte der Werkstoffe ≥ 5 g/cm³ und ≤ 18 g/cm³ beträgt.
20. Verfahren gemäß Ausführungsform 18, dadurch gekennzeichnet, dass die Massendichte der Werkstoffe ≥ 7 g/cm³ und ≤ 18 g/cm³ beträgt.
21. Verfahren gemäß einer der Ausführungsformen 1 bis 20, dadurch gekennzeichnet, dass sowohl die Massendichte der Kristallschmelze im Kristallschmelzeraum als auch der Mutterlauge und der Kristallsuspension im Prozessraum ≤ 1,5 g/cm³ und ≥ 0,7 g/cm³ beträgt.
22. Verfahren gemäß Ausführungsform 21, dadurch gekennzeichnet, dass die Massendichte ≤ 1,3 g/cm³ und ≥ 0,7 g/cm³ beträgt.
23. Verfahren gemäß einer der Ausführungsformen 1 bis 22, dadurch gekennzeichnet, dass das Öffnungsverhältnis der Abtrageinrichtung ≥ 0,05 und < 1 beträgt.
24. Verfahren gemäß Ausführungsform 23, dadurch gekennzeichnet, dass das Öffnungsverhältnis der Abtrageinrichtung ≥ 0,1 und ≤ 0,95 beträgt.
25. Verfahren gemäß einer der Ausführungsformen 1 bis 24, dadurch gekennzeichnet, dass die Abtrageinrichtung auf ihrer dem Kristallbett zugewandten Seite wenigstens ein Abtragmesser aufweist, wobei die Fläche des Abtragmessers und die Rotationsachse der Antriebswelle einen spitzen Winkel γ einschließen.
26. Verfahren gemäß Ausführungsform 25, dadurch gekennzeichnet, dass die Abtrageinrichtung eine Durchtrittsöffnungen aufweisende Scheibe ist, wobei jede Durchtrittsöffnung mit einem Abtragmesser bestückt ist.
27. Verfahren gemäß einer der Ausführungsformen 1 bis 26, dadurch gekennzeichnet, dass die Rotationsachse der Abtrageinrichtung und die Symmetrieachse des Prozessraums, bezogen auf den über die Höhe des Prozessraums gemittelten Durchmesser des Prozessraums, um weniger als 20 % seitlich zueinander versetzt sind.
28. Verfahren gemäß einer der Ausführungsformen 1 bis 26, dadurch gekennzeichnet, dass die Rotationsachse der Abtrageinrichtung und die Symmetrieachse des Prozessraums, bezogen auf den über die Höhe des Prozessraums gemittelten Durchmesser des Prozessraums, um weniger als 5 % seitlich zueinander versetzt sind.
29. Verfahren gemäß einer der Ausführungsformen 1 bis 28, dadurch gekennzeichnet, dass der maximale Durchmesser der Antriebswelle in ihrem zwischen der Abtrageinrichtung und demjenigen Lager, in welchem die Lagerung so ausgeführt ist, dass sie die an der Antriebswelle in deren Längsrichtung nach unten gerichtet angreifende Kraft aufnimmt, gelegenen Längsabschnitt 50 mm bis 400 mm beträgt.
30. Verfahren gemäß einer der Ausführungsformen 1 bis 28, dadurch gekennzeichnet, dass der maximale Durchmesser der Antriebswelle in ihrem zwischen der Abtrageinrichtung und demjenigen Lager, in welchem die Lagerung so ausgeführt ist, dass sie die an der Antriebswelle in deren Längsrichtung nach unten gerichtet angreifenden Kraft aufnimmt, gelegenen Längsabschnitt 100 mm bis 300 mm beträgt.
31. Verfahren gemäß einer der Ausführungsformen 1 bis 28, dadurch gekennzeichnet, dass der maximale Durchmesser der Antriebswelle in ihrem zwischen der Abtrageinrichtung und demjenigen Lager, in welchem die Lagerung so ausgeführt ist, dass sie die an der Antriebswelle in deren Längsrichtung nach unten gerichtet angreifende Kraft aufnimmt, gelegenen Längsabschnitt 150 mm bis 250 mm beträgt.
32. Verfahren gemäß einer der Ausführungsformen 1 bis 31, dadurch gekennzeichnet, dass der Gehalt der in den Prozessraum geführten Suspension an der chemischen Zielverbindung ≥ 70 Gew.-% beträgt.
33. Verfahren gemäß einer der Ausführungsformen 1 bis 31, dadurch gekennzeichnet, dass der Gehalt der in den Prozessraum geführten Suspension an der chemischen Zielverbindung ≥ 80 Gew.-% beträgt.
34. Verfahren gemäß einer der Ausführungsformen 1 bis 31, dadurch gekennzeichnet, dass der Gehalt der in den Prozessraum geführten Suspension an der chemischen Zielverbindung ≥ 90 Gew.-% beträgt.
35. Verfahren gemäß einer der Ausführungsformen 1 bis 34, dadurch gekennzeichnet, dass der Kristallisationsgrad der in den Prozessraum geführten Suspension 0,10 bis 0,60 beträgt.
36. Verfahren gemäß einer der Ausführungsformen 1 bis 34, dadurch gekennzeichnet, dass der Kristallisationsgrad der in den Prozessraum geführten Suspension 0,20 bis 0,40 beträgt.
37. Verfahren gemäß einer der Ausführungsformen 1 bis 36, dadurch gekennzeichnet, dass die chemische Zielverbindung eine Verbindung aus der Gruppe bestehend aus Acrylsäure, Methacrylsäure, N-Vinylpyrrolidon und p-Xylol ist.
38. Verfahren gemäß einer der Ausführungsformen 1 bis 37, dadurch gekennzeichnet, dass die chemische Zielverbindung Acrylsäure ist und die dem Prozessraum zugeführte Suspension ≥ 65 Gew.-% Acrylsäure und 0,1 bis 30 Gew:-% Wasser enthält.
39. Verfahren gemäß einer der Ausführungsformen 1 bis 37, dadurch gekennzeichnet, dass die chemische Zielverbindung Acrylsäure ist und die dem Prozessraum zugeführte Suspension ≥ 80 Gew.-% Acrylsäure und 0,5 bis 15 Gew.-% Wasser enthält.
40. Verfahren gemäß einer der Ausführungsformen 1 bis 37, dadurch gekennzeichnet, dass die chemische Zielverbindung Acrylsäure ist und die dem Prozessraum zugeführte Suspension ≥ 90 Gew.-% Acrylsäure und 0,7 bis 9 Gew.-% Wasser enthält.
41. Verfahren gemäß einer der Ausführungsformen 1 bis 40, dadurch gekennzeichnet, dass diejenige Lagerung in den wenigstens zwei Lagern, die so ausgeführt ist, dass sie die an der Antriebswelle in deren Längsrichtung nach unten gerichtet angreifende Kraft aufnimmt, so ausgeführt ist, dass sie an der Antriebswelle in deren Längsrichtung nach unten gerichtet angreifende Kräfte aufzunehmen vermag, die ≥ 100 kN betragen.
42. Verfahren gemäß einer der Ausführungsformen 1 bis 41, dadurch gekennzeichnet, dass diejenige Lagerung in den wenigstens zwei Lagern, die so ausgeführt ist, dass sie eine an der Antriebswelle in deren Längsrichtung nach oben gerichtet angreifende Kraft aufzunehmen vermag, so ausgeführt ist, dass sie an der Antriebswelle in deren Längsrichtung nach oben gerichtet angreifende Kräfte aufzunehmen vermag, die ≥ 50 kN betragen.
43. Verfahren gemäß einer der Ausführungsformen 1 bis 41, dadurch gekennzeichnet, dass diejenige Lagerung in den wenigstens zwei Lagern, die so ausgeführt ist, dass sie eine an der Antriebswelle in deren Längsrichtung nach oben gerichtet angreifende Kraft aufzunehmen vermag, so ausgeführt ist, dass sie an der Antriebswelle in deren Längswelle nach oben gerichtet angreifende Kräfte aufzunehmen vermag, die ≥ 75 kN betragen.
44. Verfahren gemäß einer der Ausführungsformen 1 bis 43, dadurch gekennzeichnet, dass die Antriebswelle in wenigstens zwei Lagern drehbar gelagert ist, wobei die Lagerung in einem ersten Lager als Führungslagerung, die sowohl die an der Antriebswelle in deren Längsrichtung nach unten gerichtet angreifende Kraft als auch die im ersten Lager von der Antriebswelle radial nach außen wirkenden Kräfte aufnimmt sowie zusätzlich eine an der Antriebswellen in deren Längsrichtung nach oben gerichtet angreifende Kraft aufzunehmen vermag, und in einem zweiten Lager als Radiallagerung, die nur die in diesem zweiten Lager von der Antriebswelle radial nach außen wirkenden Kräfte aufnimmt, ausgeführt ist.
45. Verfahren gemäß Ausführungsform 44, dadurch gekennzeichnet, dass das erste Lager ein Schrägkugellager, ein Pendelkugellager oder ein Pendelrollenlager ist.
46. Verfahren gemäß Ausführungsform 44 oder 45, dadurch gekennzeichnet, dass das zweite Lager ein Rillenkugellager oder ein Pendelrollenlager ist.
47. Verfahren gemäß einer der Ausführungsformen 44 bis 46, dadurch gekennzeichnet, dass die Lagerung der Antriebswelle im zweiten Lager oberhalb der Lagerung der Antriebswelle im ersten Lager ausgeführt ist.
48. Verfahren gemäß einer der Ausführungsformen 44 bis 47, dadurch gekennzeichnet, dass alle Lagerungen unterhalb des Eingangs der Antriebswelle in den Kristallschmelzeraum ausgeführt sind.
49. Verfahren gemäß einer der Ausführungsformen 1 bis 43, dadurch gekennzeichnet, dass die Antriebswelle in wenigstens drei Lagern drehbar gelagert ist, wobei die Lagerung in einem ersten Lager als Stützlagerung, die sowohl die an der Antriebswelle in deren Längsrichtung nach unten gerichtet angreifende Kraft als auch die im ersten Lager von der Antriebswelle radial nach außen wirkenden Kräfte aufnimmt, in einem zweiten Lager ebenfalls als Stützlagerung, die sowohl die im zweiten Lager von der Antriebswelle radial nach außen wirkenden Kräfte aufnimmt als auch eine an der Antriebswelle in deren Längsrichtung nach oben gerichtet angreifende Kraft aufzunehmen vermag, und in einem dritten Lager als Radiallagerung, die nur die in diesem dritten Lager von der Antriebswelle radial nach außen wirkenden Kräfte aufnimmt, ausgeführt ist.
50. Verfahren gemäß Ausführungsform 49, dadurch gekennzeichnet, dass das erste Lager ein Achsial-Pendelrollenlager ist.
51. Verfahren gemäß Ausführungsform 49 oder 50, dadurch gekennzeichnet, dass das zweite Lager ein Pendelrollenlager ist.
52. Verfahren gemäß einer der Ausführungsformen 49 bis 51, dadurch gekennzeichnet, dass das dritte Lager ein Pendelrollenlager ist.
53. Verfahren gemäß einer der Ausführungsformen 49 bis 52, dadurch gekennzeichnet, dass die Lagerung der Antriebswelle im ersten Lager unterhalb der Lagerung im zweiten Lager und diese unterhalb der Lagerung im dritten Lager ausgeführt ist.
54. Verfahren gemäß einer der Ausführungsformen 49 bis 53, dadurch gekennzeichnet, dass alle Lagerungen unterhalb des Eingangs der Antriebswelle in den Kristallschmelzeraum ausgeführt sind.
55. Verfahren gemäß einer der Ausführungsformen 1 bis 54, dadurch gekennzeichnet, dass das dritte Lager einschließlich der Lagerung in demselben entfällt.
56. Verfahren gemäß einer der Ausführungsformen 1 bis 55, dadurch gekennzeichnet, dass die Abtrageinrichtung auf ihrer dem Kristallbett zugewandten Seite wenigstens ein Abtragmesser aufweist, wobei die Fläche des Abtragmessers und die Rotationsachse der Antriebswelle einen Winkel γ einschließen für den 20° ≤ γ ≤ 70° gilt.
57. Verfahren gemäß einer der Ausführungsformen 1 bis 55, dadurch gekennzeichnet, dass die Abtrageinrichtung auf ihrer dem Kristallbett zugewandten Seite wenigstens ein Abtragmesser aufweist, wobei die Fläche des Abtragmessers und die Rotationsachse der Antriebswelle einen Winkel γ einschließen für den 30°C ≤ γ ≤ 60° gilt.
58. Verfahren gemäß einer der Ausführungsformen 1 bis 57, dadurch gekennzeichnet, dass die Kristalle in der Suspension mehrheitich eine Längstausdehnung im Bereich 50 bis 1 500 µm aufweisen.
59. Verfahren gemäß einer der Ausführungsformen 1 bis 58, dadurch gekennzeichnet, dass die Dichtung eine doppelt wirkende achsiale Gleitringdichtung ist, die zwei Gleitringpaare umfasst.
60. Verfahren gemäß Ausführungsform 59, dadurch gekennzeichnet, dass das von unten nach oben weiter oben gelegene Gleitringpaar frei in der Kristallschmelze steht.

Figur 7 zeigt beispielhaft ein Achsial-Rillenkugellager (ein Sandwich-Wälzlager). Die numerischen Adressen haben dabei folgende Bedeutung:
54 : obere Scheibe;
55: untere Scheibe;
56 : Wälzkörper.

Figur 8 zeigt beispielhaft ein Pendelrollenlager (konzentrische Ringe). Die neuen numerischen Adressen haben dabei folgende Bedeutung:
57 : äußerer Ring;
58: innerer Ring.

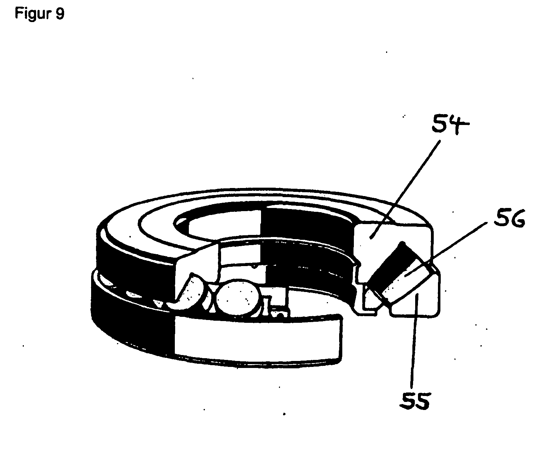

Figur 9 zeigt beispielhaft ein Achsial-Pendelrollenlager.

### Beispiele

Die verwendete Waschkolonne war eine hydraulische Waschkolonne gemäß Figur 2 der EP-B 1448282. Die Länge des Prozessraums betrug 1500 mm. Er enthielt 54 Filterrohre mit einem Außendurchmesser von 48,3 mm und einem Innendurchmesser von 38,3 mm sowie einen zentralen kreiszylindrischen Verdränger des Durchmessers 350 mm. Die Länge der Filterrohre lag (um Abstand derselben zur Abtrageinrichtung zu gewährleisten) bei 1497 mm (einschließlich 250 mm Verdrängerabschnitt) und die Länge der in ihnen integrierten (um den ganzen Rohrumfang umlaufenden) Filter betrug 70 mm. Der Querschnitt des Prozessraums lag über seine Länge im Wesentlichen bei 1,54 m². Die Anordnung der Filterrohre und des zentralen Verdrängers folgte Figur 3 der EP-B 1448282. Die Filter waren nach einer Rohrlänge von 1177 mm (von oben gemessen) eingebaut (die Filteröffnungen betrugen 250 bis 300 µm). Als Abtrageinrichtung wurde eine geschlitzte Messerscheibe gemäß Figur 5 der EP-B 1448282 eingesetzt. Sie wies insgesamt achtzehn (18) Schlitze auf (auf dem inneren Ring lagen sechs (6) und auf dem äußeren Ring lagen zwölf (12)), die eine einheitliche Langlochgeometrie aufwiesen. Der Abstand der beiden Lochzentren betrug 275 mm und der Lochdurchmesser lag bei 55 mm. Die Scheibendicke (die Schlitzhöhe) betrug 50 mm (gerechnet bis zur maximalen Profilhöhe). Der Durchmesser der Messerscheibe war 1468 mm. Jeder Langlochschlitz war gemäß Figur 5 der EP-A 1448282 mit einem Abtragmesser (einer Abtragmesserklinge) bestückt (die Dicke des Messerrückens betrug ca. 15 mm). Die Länge der Klinge betrug 272 mm, der Winkel γ war 40° und die jeweilige Messerklinge ragte um 3 mm über die dem Kristallbett zugewandte Oberfläche der geschlitzten Messerscheibe hinaus (die Profilierung derselben wird dabei außer Acht gelassen, d.h., die Angabe ist auf den höchsten Punkt der Profilierung bezogen). Die dem Kristallbett zugewandte Oberfläche der Messerscheibe war außerdem mit einem Profil aus konzentrischen Rillen versehen (der Rillenquerschnitt war dreieckig; die Rillentiefe betrug 5 mm, die Rillenweite 13,5 mm und in radialer Richtung aufeinanderfolgender Rillen besaßen jeweils einen gemeinsamen Eckpunkt).

Die Messerscheibe rotierte mit acht (8) Umdrehungen je Minute gegen den Uhrzeigersinn (von oben auf die Messerscheibe geblickt). Der Waschkolonnenkörper war von einem Tragring gehalten und wie im Ausführungsbeispiel der deutschen Anmeldung Nr. 102008040340.7 und im Beispiel der DE-A 10 2007 004 960 mit Wärmedämmmaterial umhüllt. Im Übrigen entsprach die Waschkolonnenvorrichtung der in den Figuren 5 und 6 gezeigten und in der Beschreibung diese Schrift ausführlich beschriebenen Einheit. Die gesamte Waschvorrichtung war, wie im Ausführungsbeispiel der deutschen Anmeldung Nr. 102008040340.7 und im Beispiel der DE-A 10 2007 004 960 beschrieben, in einer beheizten Behausung untergebracht. Die Steuerung der Mengenströme erfolgte wie in der DE-A 102005018702 und WO 2006/111565 beschrieben. Im Wesentlichen waren alle Bauteile der Waschkolonnenvorrichtung aus Edelstahl gefertigt. Der maximale Durchmesser der Antriebswelle im Längenbereich zwischen der untersten Stützlagerung und der doppelt wirkenden achsialen Gleitringdichtung betrug 220 mm. Die Länge der Antriebswelle war 2,5 m. Die Antriebswelle führte bis zur Abtrageinrichtung. Von oben nach unten war die Radiallagerung nach 900 mm, die erste Stützlagerung nach 1300 mm und die zweite Stützlagerung nach 1480 mm angebracht. α und β waren beide ca. 0°. Die Gewichtskraft der Gesamtmasse der Antriebswelle und der an ihr befestigten Bauteile betrug 14,6 kN. Die verwendeten Lager waren die in der Beschreibung mit Bezug zu Figur 6 individuell benannten.

Als Kristallsuspension wurde dem Prozessraum über den oberhalb von diesem (wie in der Figur 2 der EP-B 1448282 abgebildet) befindlichen Verteilerraum eine Suspension von Acrylsäurekristallen in Mutterlauge zugeführt. Die Förderung des Kristallbetts erfolgte von oben nach unten. Die Herstellung der Kristallsuspension erfolgte wie in der DE-A 102007043748 und in der DE-A 102007004960 beschrieben. Der Kristallisationsgrad betrug ca. 0,28. Der Acrylsäuregehalt der Kristallsuspension betrug etwa 93 bis 95 Gew.-%. Der Wassergehalt der Kristallsuspension lag bei 3 bis 5 Gew.-% (jeweils auf das Gesamtgewicht der Kristallsuspension bezogen). Die Kristallsuspension war mit Phenothiazin (PTZ), dem Monomethylether des Hydrochinons (MEHQ) und molekularem Sauerstoff polymerisationsinhibiert. Die Längstausdehnung der Acrylsäurekristalle lag im Bereich von 200 bis 800 µm. Die Zufuhr der Kristallsuspension erfolgte mittels einer Kreiselpumpe (Typ Kanalrad), wobei die Mengensteuerung über eine Drehzahlregelung der Pumpe erfolgte. Die Steuerstrompumpe war ebenfalls als Kreiselpumpe mit Regelventil ausgeführt. Als Steuerflüssigkeit wurde rückgeführte abgeführte Mutterlauge verwendet. Die zur Regelung der Waschkolonne angewandte Steuerstrommenge lag bei 8 bis 30 t/h. Teilweise war es möglich, die Waschkolonne ohne Steuerstrom zu betreiben, wenn der mit der Suspension zugeführte Flüssigkeitsmengenstrom bereits für den Transport des Kristallbetts ausreichend war. Das Verhältnis von wirksamer Transportdruckdifferenz zu wirksamer Waschdruckdifferenz betrug 1,5 ± 0,3. Der Umlaufmengenstrom im Schmelzkreis betrug 10 bis 15 m³/h bezogen auf einen Strom an abgetragenem Kristallisat von 1 t/h. Die Temperatur im Schmelzkreis betrug 13 bis 16 °C. Die Polymerisationsinhibierung des Schmelzkreises erfolgte mit MEHQ wie in der DE-A 102007004960 beschrieben (der PTZ-Gehalt lag unterhalb der Nachweisgrenze). Zusätzlich wurde in den Schmelzkreis Luft eingetragen, deren Überschuss (= nicht in der Kristallschmelze gelöster Anteil) vor der Rückführung in den Kristallschmelzeraum via Gasabscheider abgetrennt wurde. Die Erfassung der Aufbaufront erfolgte gemäß der DE-A 102005018702 über zwei zueinander ins Verhältnis gesetzte Druckverlustmessungen über unterschiedliche Kristallbettlängen vorgenommen. Die Waschfront wurde mittels Temperaturmessung im Kristallbett geregelt. Der zugeführte Strom an Kristallsuspension (angegeben als reiner Kristallstrom) war (abhängig von der Produktnachfrage) 5 - 6 t/h (Niederlastbetrieb) bzw. 12-13 t/h (Hochlastbetrieb). Seine Temperatur bewegte sich im Bereich von 6 bis 9 °C. Die Gesamthöhe des Kristallbetts (bis zur Aufbaufront) lag meist im Bereich von 600 bis 1 100 mm.

Die Waschfront befand sich 100 bis 200 (meist ca. 150) mm oberhalb der geschlitzten Messerscheibe. Als Schmelzkreispumpe wurde eine Kreiselpumpe mit produktseitiger Spülung der Wellenabdichtung (Gleitringdichtung; doppelt ausgeführt, mit auf 15 bis 30 °C gekühltem Sperrmedium (Gemisch aus Wasser (65 Gew.-%) und Ethylenglykol (35 Gew.-%; diese Sperrmedium wurde auch im Sperrraum der doppelt wirkenden achsialen Gleitringdichtung am Eingang in den Kristallschmelzeraum verwendet). Aus dem Auslass des Schmelzkreises wurden 5 - 6 t/h (Niederlastbetrieb) bzw. 12 -13 t/h (Hochlastbetrieb) einer Reinacrylsäureschmelze entnommen, deren Acrylsäuregehalt 99,8 Gew.-% betrug. Der Rekristallisationsgrad bewegte sich im Bereich 95-100 %.

Das Verfahren konnte über einen Betriebszeitraum von 6 Monaten ungestört betrieben werden.

### Vergleichsbeispiel

Es wurde wie im Beispiel verfahren, jedoch mit dem Unterschied, dass die zweite Stützlagerung nur als Radiallagerung ausgeführt war (die Stützscheibe 48 war nicht nach unten bis zum Außenring des ersten Pendelrollenlagers verlängert). Innerhalb einer Betriebsdauer von 6 Monaten traten zwei Leckagen der doppelt wirkenden achsialen Gleitringdichtung am Eingang in den Kristallschmelzeraum auf (die Leckagen machten sich durch Sperrflüssigkeitsverluste und in den Sperrraum eindringende Acrylsäure bemerkbar).

## Patentansprüche

1. Verfahren zum reinigenden Abtrennen einer chemischen Zielverbindung aus einer Suspension ihrer Kristalle in Mutterlauge, mit einer Waschvorrichtung, die als wenigstens ein Element eine aus verschiedenen Bauteilen bestehende Waschkolonne umfasst, die als ein erstes Bauteil eine ortsfest fixierte Wand aufweist,
die einen zu seiner Längsachse rotationssymmetrischen Prozessraum und einen sich an diesen anschließenden Kristallschmelzeraum umhüllt, wobei der Einschlusswinkel α zwischen der Raumrichtung der Symmetrieachse und der Vertikalen nicht mehr als 20° beträgt und der Prozessraum durch die Wand der Waschkolonne und zwei auf der Symmetrieachse einander gegenüberliegende Enden begrenzt wird, von denen das auf der Symmetrieachse höher gelegene Ende das Zufuhr-Ende und das auf der Symmetrieachse tiefer gelegene Ende das Abtrag-Ende bildet, bei dem
- am Zufuhr-Ende ein Strom der Suspension in den Prozessraum geführt wird,
- unter Zurückhaltung der Kristalle und unter Ausbildung eines Kristallbetts im Prozessraum aus dem in den Prozessraum geführten Suspensionsstrom ein Mutterlaugestrom aus dem Prozessraum abgegeben wird,
- als weiteres Bauteil der Waschkolonne in derselben am Abtrag-Ende des Prozessraums eine Abtrageinrichtung rotiert,
- das Kristallbett im Prozessraum mit wenigstens einer von der Gravitation verschiedenen Kraft und parallel zur Symmetrieachse des Prozessraums auf die rotierende Abtrageinrichtung zu gefördert wird und dabei auf die Abtrageinrichtung stößt,
- die rotierende Abtrageinrichtung vorn auf sie stoßenden Kristallbett Kristalle abträgt,
- der Strom der abgetragenen Kristalle durch die rotierende Abtrageinrichtung hindurch und/oder an der rotierenden Abtrageinrichtung vorbei in den sich in Förderrichtung des Kristallbetts hinter der Abtrageinrichtung an den Prozessraum anschließenden Kristallschmelzeraum der Waschkolonne fließt,
- als weiteres Bauteil der Waschkolonne eine Antriebswelle, die von einem Antriebsaggregat zur Rotation um ihre Längsachse angetrieben wird, von unten durch einen in den Kristallschmelzeraum führenden Eingang hindurch in die Waschkolonne geführt ist, wobei der Einschlusswinkel β zwischen der Raumrichtung der Rotationsachse der Antriebswelle und der Raumrichtung der Symmetrieachse des Prozessraums bei keiner Projektion der beiden Raumrichtungen in eine Ebene mehr als 20° beträgt,
- die Abtrageinrichtung an der Antriebswelle befestigt ist und die rotierende Antriebswelle das für die Rotation der Abtrageinrichtung erforderliche Drehmoment auf diese überträgt,
- der in den Kristallschmelzeraum geförderte Kristallstrom im Kristallschmelzeraum und/oder in einem durch den Kristallschmelzeraum geführten Schmelzkreis durch Eintrag von Wärme zu einem Kristallschmelzestrom aufgeschmolzen wird,
- der Eingang für die Antriebswelle in den Kristallschmelzeraum mit einer Dichtung ausgerüstet ist, die dem nicht beabsichtigten Austritt von Kristallschmelze aus dem Kristallschmelzeraum durch den Eingang in diesen hindurch entgegenwirkt,
- bezogen auf die Stärke des vorgenannten Kristallschmelzestroms vom Kristallschmelzeraum ausgehend ein Teilstrom an Kristallschmelze als Waschschmelzestrom durch die rotierende Abtrageinrichtung hindurch und/oder an der rotierenden Abtrageinrichtung vorbei gegen die Bewegungsrichtung des Kristallbetts so in den Prozessraum geführt wird, dass sich im Kristallbett eine Waschfront ausbildet, die das Kristallbett in eine Mutterlaugenzone und in eine Waschschmelzezone aufteilt, und der restliche Teilstrom als Reinschmelzestrom der chemischen Zielverbindung seinem Auslass zugeführt wird,
- die an der Antriebswelle in deren Längsrichtung im Normalbetrieb des Verfahrens angreifende Kraft stetig nach unten gerichtet ist,
- die Antriebswelle in mehr als einem Lager um ihre Längsachse drehbar gelagert ist,
- die Lagerung in einem der Lager so ausgeführt ist, dass die Lagerung in diesem Lager die an der Antriebswelle in deren Längsrichtung nach unten gerichtet angreifende Kraft aufnimmt, und
- die Lagerung in wenigstens zwei Lagern so ausgeführt ist, dass die Lagerung in jedem dieser zwei Lager die von der Antriebswelle im jeweiligen der zwei Lager radial nach außen wirkenden Kräfte aufnimmt,
**dadurch gekennzeichnet, dass**
- zusätzlich die Lagerung in einem der Lager so ausgeführt ist, dass die Lagerung in diesem Lager eine an der Antriebswelle in deren Längsrichtung nach oben gerichtet angreifende Kraft aufzunehmen vermag, und
-- diejenige Lagerung in den wenigstens zwei Lagern, die so ausgeführt ist, dass sie eine an der Antriebswelle in deren Längsrichtung nach oben gerichtet angreifende Kraft aufzunehmen vermag, so ausgeführt ist, dass sie an der Antriebswelle in deren Längsrichtung nach oben gerichtet angreifende Kräfte aufzunehmen vermag, die ≥ 50 kN betragen.

2. Verfahren nach Anspruch 1, **dadurch gekennzeichnet, dass** die Gewichtskraft der Gesamtmasse der Antriebswelle und aller an ihr befestigten mitrotierenden Bauteile ≥ 3 kN beträgt.

3. Verfahren nach Anspruch 1 oder 2, **dadurch gekennzeichnet, dass** die Gewichtskraft der Gesamtmasse der Antriebswelle und aller an ihr befestigten mitrotierenden Bauteile ≤ 50 kN beträgt.

4. Verfahren nach einem der Ansprüche 1 bis 3, **dadurch gekennzeichnet, dass** der Winkel α nicht mehr als 20° beträgt.

5. Verfahren nach einem der Ansprüche 1 bis 4, **dadurch gekennzeichnet, dass** der Winkel β nicht mehr als 10° beträgt.

6. Verfahren nach einem der Ansprüche 1 bis 5, **dadurch gekennzeichnet, dass** die Differenz zwischen der Temperatur T^{SCH} der Waschschmelze und der Temperatur T^{SP} der dem Prozessraum zugeführten Suspension 1 bis 25 °C beträgt.

7. Verfahren nach einem der Ansprüche 1 bis 6, **dadurch gekennzeichnet, dass** die Dichtung eine doppelt wirkende achsiale Gleitringdichtung ist.

8. Verfahren nach einem der Ansprüche 1 bis 7, **dadurch gekennzeichnet, dass** die Antriebswelle und die Abtrageinrichtung aus Werkstoffen gefertigt sind, deren Massendichte bei 25 °C und 1 atm ≥ 3 g/cm³ und ≤ 18 g/cm³ beträgt.

9. Verfahren nach einem der Ansprüche 1 bis 8, **dadurch gekennzeichnet, dass** sowohl die Massendichte der Kristallschmelze im Kristallschmelzeraum als auch der Mutterlauge und der Kristallsuspension im Prozessraum ≤ 1,5 g/cm³ und ≥ 0,7 g/cm³ beträgt.

10. Verfahren nach einem der Ansprüche 1 bis 9, **dadurch gekennzeichnet, dass** das Öffnungsverhältnis der Abtrageinrichtung ≥ 0,05 und < 1 beträgt.

11. Verfahren nach einem der Ansprüche 1 bis 10, **dadurch gekennzeichnet, dass** die Abtrageinrichtung auf ihrer dem Kristallbett zugewandten Seite wenigstens ein Abtragmesser aufweist, wobei die Fläche des Abtragmessers und die Rotationsachse der Antriebswelle einen spitzen Winkel γ einschließen.

12. Verfahren nach Anspruch 11, **dadurch gekennzeichnet, dass** die Abtrageinrichtung eine Durchtrittsöffnungen aufweisende Scheibe ist, wobei jede Durchtrittsöffnung mit einem Abtragmesser bestückt ist.

13. Verfahren nach einem der Ansprüche 1 bis 12, **dadurch gekennzeichnet, dass** der maximale Durchmesser der Antriebswelle in ihrem zwischen der Abtrageinrichtung und demjenigen Lager, in welchem die Lagerung so ausgeführt ist, dass sie die an der Antriebswelle in deren Längsrichtung nach unten gerichtet angreifende Kraft aufnimmt, gelegenen Längsabschnitt 50 mm bis 400 mm beträgt.

14. Verfahren nach einem der Ansprüche 1 bis 13, **dadurch gekennzeichnet, dass** der Gehalt der in den Prozessraum geführten Suspension an der chemischen Zielverbindung ≥ 70 Gew.-% beträgt.

15. Verfahren nach einem der Ansprüche 1 bis 14, **dadurch gekennzeichnet, dass** der Kristallisationsgrad der in den Prozessraum geführten Suspension 0,10 bis 0,60 beträgt.

16. Verfahren nach einem der Ansprüche 1 bis 15, **dadurch gekennzeichnet, dass** die chemische Zielverbindung eine Verbindung aus der Gruppe bestehend aus Acrylsäure, Methacrylsäure, N-Vinylpyrrolidon und p-Xylol ist.

17. Verfahren nach einem der Ansprüche 1 bis 16, **dadurch gekennzeichnet, dass** die chemische Zielverbindung Acrylsäure ist und die dem Prozessraum zugeführte Suspension ≥ 65 Gew.-% Acrylsäure und 0,1 bis 30 Gew.-% Wasser enthält.

18. Verfahren nach einem der Ansprüche 1 bis 17, **dadurch gekennzeichnet, dass** diejenige Lagerung, in den wenigstens zwei Lagern, die so ausgeführt ist, dass sie die an der Antriebswelle in deren Längsrichtung nach unten gerichtet angreifende Kraft aufnimmt, so ausgeführt ist, dass sie an der Antriebswelle in deren
Längsrichtung nach unten gerichtet angreifende Kräfte aufzunehmen vermag, die ≥ 50 kN betragen.

19. Verfahren nach einem der Ansprüche 1 bis 18, **dadurch gekennzeichnet, dass** die Antriebswelle in wenigstens zwei Lagern drehbar gelagert ist, wobei die Lagerung in einem ersten Lager als Führungslagerung, die sowohl die an der Antriebswelle in deren Längsrichtung nach unten gerichtet angreifende Kraft als auch die im ersten Lager von der Antriebswelle radial nach außen wirkenden Kräfte aufnimmt sowie zusätzlich eine an der Antriebswellen in deren Längsrichtung nach oben gerichtet angreifende Kraft aufzunehmen vermag, und in einem zweiten Lager als Radiallagerung, die nur die in diesem zweiten Lager von der Antriebswelle radial nach außen wirkenden Kräfte aufnimmt, ausgeführt ist

20. Verfahren nach einem der Ansprüche 1 bis 18, **dadurch gekennzeichnet, dass** die Antriebswelle in wenigstens drei Lagern drehbar gelagert ist, wobei die Lagerung in einem ersten Lager als Stützlagerung, die sowohl die an der Antriebswelle in deren Längsrichtung nach unten gerichtet angreifende Kraft als auch die im ersten Lager von der Antriebswelle radial nach außen wirkenden Kräfte aufnimmt, in einem zweiten Lager ebenfalls als Stützlagerung, die sowohl die im zweiten Lager von der Antriebswelle radial nach außen wirkenden Kräfte aufnimmt als auch eine an der Antriebswelle in deren Längsrichtung nach oben gerichtet angreifende Kraft aufzunehmen vermag, und in einem dritten Lager als Radiallagerung, die nur die in diesem dritten Lager von der Antriebswelle radial nach außen wirkenden Kräfte aufnimmt, ausgeführt Ist.

## Claims

1. A process for purifying removal of a chemical target compound from a suspension of crystals thereof in mother liquor with a wash apparatus which comprises, as at least one element, a wash column which consists of various components and has, as a first component, a fixed wall which encloses a process space which is rotationally symmetric with respect to its longitudinal axis and a crystal melt space which adjoins said process space, the angle α formed between the three-dimensional direction of the axis of symmetry and the vertical being not more than 20°, and the process space being delimited by the wall of the wash column and two opposite ends on the axis of symmetry, of which the higher end on the axis of symmetry constitutes the feed end and the lower end on the axis of symmetry the removal end, in which
- at the feed end, a stream of the suspension is conducted into the process space,
- while retaining the crystals to form a crystal bed in the process space from the suspension stream conducted into the process space, a mother liquor stream is released from the process space,
- as a further component of the wash column, a removal device rotates therein at the removal end of the process space,
- the crystal bed is conveyed within the process space with at least one force other than gravity and parallel to the axis of symmetry of the process space toward the rotating removal device to meet the removal device,
- the rotating removal device removes crystals from the crystal bed which meets it,
- the stream of the crystals removed flows through the rotating removal device and/or past the rotating removal device into the crystal melt space, which adjoins the process space beyond the removal device in conveying direction of the crystal bed, of the wash column,
- as a further component of the wash column, a drive shaft which is driven about its longitudinal axis by a drive unit for rotation is conducted into the wash column from below through an inlet leading into the crystal melt space, the angle β formed between the three-dimensional direction of the axis of rotation of the drive shaft and the three-dimensional direction of the axis of symmetry of the process space not being more than 20° in any projection of the two three-dimensional directions into one plane,
- the removal device is secured on the drive shaft and the rotating drive shaft transmits the torque required for the rotation of the removal device thereto,
- the crystal stream conducted into the crystal melt space is melted in the crystal melt space and/or in a melt circuit conducted through the crystal melt space by introducing heat to give a crystal melt stream,
- the inlet for the drive shaft into the crystal melt space is equipped with a seal which counteracts the unintended exit of crystal melt from the crystal melt space through the inlet into it,
- based on the strength of the aforementioned crystal melt stream, proceeding from the crystal melt space, a substream of crystal melt, as a wash melt stream, is conducted through the rotating removal device and/or past the rotating removal device against the direction of movement of the crystal bed into the process space so as to form, in the crystal bed, a wash front which divides the crystal bed into a mother liquor zone and into a wash melt zone, and the remaining substream is sent to its outlet as a pure melt stream of the chemical target compound,
- the force which acts on the drive shaft in the longitudinal direction thereof in normal operation of the process is always directed downward,
- the drive shaft is mounted so as to be rotatable about its longitudinal axis in more than one bearing,
- the mounting in one of the bearings is configured such that the mounting in this bearing absorbs the downward force acting on the drive shaft in the longitudinal direction thereof, and
- the mounting in at least two bearings is configured such that the mounting in each of these two bearings absorbs the forces acting radially outward from the drive shaft in the particular bearing of the two bearings,
wherein
-- the mounting in one of the bearings is additionally configured such that the mounting in this bearing is capable of absorbing an upward force acting on the drive shaft in the longitudinal direction thereof, and
-- that mounting in the at least two bearings which is configured such that it is capable of absorbing an upward force acting on the drive shaft in the longitudinal direction thereof is configured such that it is capable of absorbing upward forces acting on the drive shaft in the longitudinal direction thereof which are ≥ 50 kN.

2. The process according to claim 1, wherein the weight of the total mass of the drive shaft and of all corotating components secured to it is ≥ 3 kN.

3. The process according to claim 1 or 2, wherein the weight of the total mass of the drive shaft and of all corotating components secured to it is ≤ 50 kN.

4. The process according to any one of claims 1 to 3, wherein the angle α is not more than 20°.

5. The process according to any one of claims 1 to 4, wherein the angle β is not more than 10°.

6. The process according to any one of claims 1 to 5, wherein the difference between the temperature T^{SCH} of the wash melt and the temperature T^{SP} of the suspension fed to the process space is 1 to 25°C.

7. The process according to any one of claims 1 to 6, wherein the seal is a double-action axial slip ring seal.

8. The process according to any one of claims 1 to 7, wherein the drive shaft and the removal device are manufactured from materials whose density at 25°C and 1 atm is ≥ 3 g/cm³ and ≤ 18 g/cm³.

9. The process according to any one of claims 1 to 8, wherein the density of the crystal melt in the crystal melt space, of the mother liquor and of the crystal suspension in the process space is ≤ 1.5 g/cm³ and ≥ 0.7 g/cm³.

10. The process according to any one of claims 1 to 9, wherein the orifice ratio of the removal device is ≥ 0.05 and < 1.

11. The process according to any one of claims 1 to 10, wherein the removal device has, on its side facing toward the crystal bed, at least one removal blade, where the surface of the removal blade and the axis of rotation of the drive shaft form an acute angle v.

12. The process according to claim 11, wherein the removal device is a disk having passage orifices, each passage orifice being equipped with a removal blade.

13. The process according to any one of claims 1 to 12, wherein the maximum diameter of the drive shaft in the longitudinal section thereof which is between the removal device and that bearing in which the mounting is configured such that it absorbs the downward force acting on the drive shaft in the longitudinal direction thereof is 50 mm to 400 mm.

14. The process according to any one of claims 1 to 13, wherein the content in the suspension conducted into the process space of the chemical target compound is ≥ 70% by weight.

15. The process according to any one of claims 1 to 14, wherein the degree of crystallization of the suspension conducted into the process space is 0.10 to 0.60.

16. The process according to any one of claims 1 to 15, wherein the chemical target compound is a compound from the group consisting of acrylic acid, methacrylic acid, N-vinylpyrrolidone and p-xylene.

17. The process according to any one of claims 1 to 16, wherein the chemical target compound is acrylic acid and the suspension fed to the process space comprises ≥ 65% by weight of acrylic acid and 0.1 to 30% by weight of water.

18. The process according to any one of claims 1 to 17, wherein that mounting in the at least two bearings which is configured such that it absorbs the downward force acting on the drive shaft in the longitudinal direction thereof is configured such that it is capable of absorbing downward forces acting on the drive shaft in the longitudinal direction thereof which are ≥ 50 kN.

19. The process according to any one of claims 1 to 18, wherein the drive shaft is mounted so as to be rotatable in at least two bearings, the mounting in a first bearing being configured as a guide mounting which absorbs both the downward force acting on the drive shaft in the longitudinal direction thereof and the forces acting radially outward from the drive shaft in the first bearing, and is additionally capable of absorbing an upward force acting on the drive shaft in the longitudinal direction thereof, and in a second bearing as a radial mounting which absorbs only the forces acting radially outward from the drive shaft in this second bearing.

20. The process according to any one of claims 1 to 18, wherein the drive shaft is mounted so as to be rotatable in at least three bearings, the mounting in a first bearing being configured as a support mounting which absorbs both the downward force acting on the drive shaft in the longitudinal direction thereof and the forces acting radially outward from the drive shaft in the first bearing, in a second bearing likewise as a support mounting which both absorbs the forces acting radially outward from the drive shaft in the second bearing and is capable of absorbing an upward force acting on the drive shaft in the longitudinal direction thereof, and in a third bearing as a radial mounting which absorbs only the forces acting radially outward from the drive shaft in this third bearing.

## Revendications

1. Procédé pour la séparation, avec purification, d'un composé cible chimique d'une suspension de ses cristaux dans une lessive-mère, au moyen d'un dispositif de lavage qui comprend comme au moins un élément une colonne de lavage constituée de différents modules, qui présente comme premier module une paroi fixée de manière stationnaire qui entoure un espace de procédé à symétrie de rotation par rapport à son axe longitudinal et un espace de fusion des cristaux consécutif à celui-ci, l'angle inclus α entre la direction spatiale de l'axe de symétrie et la verticale n'étant pas supérieur à 20° et l'espace de procédé étant délimité par la paroi de la colonne de lavage et deux extrémités opposées l'une à l'autre sur l'axe de symétrie, dont l'extrémité située plus haut sur l'axe de symétrie est l'extrémité d'alimentation et l'extrémité située plus bas sur l'axe de symétrie forme l'extrémité d'évacuation, dans lequel
- un flux de la suspension est introduit en l'extrémité d'alimentation dans l'espace de procédé,
- un flux de lessive-mère provenant du flux de suspension acheminé dans l'espace de procédé est déchargé de l'espace de procédé avec rétention des cristaux et formation d'un lit de cristaux dans l'espace de procédé,
- un dispositif d'évacuation tourne en tant qu'autre module de la colonne de lavage dans celle-ci en l'extrémité d'évacuation de l'espace de procédé,
- le lit de cristaux dans l'espace de procédé est transporté par au moins une force différente de la gravité et parallèlement à l'axe de symétrie de l'espace de procédé vers le dispositif d'évacuation en rotation et bute ainsi contre le dispositif d'évacuation,
- le dispositif d'évacuation en rotation évacue des cristaux du lit de cristaux qui bute contre lui,
- le flux des cristaux évacués s'écoule au travers et/ou le long du dispositif d'évacuation en rotation dans l'espace de fusion des cristaux de la colonne de lavage, consécutif à l'espace de procédé en aval du dispositif d'évacuation dans le sens de transport du lit de cristaux,
- un arbre d'entraînement, comme autre module de la colonne de lavage, qui est entraîné en rotation autour de son axe longitudinal par un appareil d'entraînement, est guidé au travers de la colonne de lavage à partir du bas au travers d'une entrée aboutissant dans l'espace de fusion des cristaux, l'angle inclus ß entre la direction spatiale de l'axe de rotation de l'arbre d'entraînement et la direction spatiale de l'axe de symétrie de la chambre de procédé n'étant pas supérieur à 20°c pour aucune projection des deux directions spatiales dans un plan,
- le dispositif d'évacuation est fixé sur l'arbre d'entraînement et l'arbre d'entraînement en rotation transfère le couple de rotation nécessaire à la rotation du dispositif d'évacuation à celui-ci,
- le flux de cristaux transporté dans l'espace de fusion des cristaux est fondu en un flux de cristaux fondus, dans l'espace de fusion des cristaux et/ou dans un circuit de fusion acheminé au travers de l'espace de fusion des cristaux par introduction de chaleur,
- l'entrée pour l'arbre d'entraînement dans l'espace de fusion des cristaux est équipée d'un joint qui s'oppose dans celle-ci à une sortie non envisagée des cristaux fondus hors de l'espace de fusion des cristaux au travers de l'entrée,
- en fonction du débit du flux de cristaux fondus susmentionné, partant de l'espace de fusion des cristaux, un flux partiel de cristaux fondus est acheminé en tant que flux de masse fondue de lavage au travers du dispositif d'évacuation en rotation et/ou le long du dispositif d'évacuation en rotation, contre la direction de mouvement du lit de cristaux dans l'espace de procédé de manière telle qu'il se forme, dans le lit de cristaux, un front de lavage qui divise le lit de cristaux en une zone de lessive-mère et une zone de masse fondue de lavage et le flux partiel résiduel est acheminé en tant que flux de masse fondue pure du composé cible chimique vers sa sortie,
- la force agissant sur l'arbre d'entraînement dans sa direction longitudinale, lors du fonctionnement normal du procédé, est toujours dirigée vers le bas,
- l'arbre d'entraînement est logé dans plus d'un roulement de manière à pouvoir tourner autour de son axe longitudinal,
- le logement dans un des roulements est réalisé de manière telle que le logement dans ce roulement absorbe la force orientée vers le bas agissant sur l'arbre d'entraînement dans sa direction longitudinale, et
- le logement dans au moins deux roulements est réalisé de manière telle que le logement dans chacun de ces deux roulements absorbe les forces agissant radialement vers l'extérieur à partir de l'arbre d'entraînement dans chacun des deux roulements,
**caractérisé en ce que**
- en outre le logement dans un des roulements est réalisé de manière telle que le logement dans ce roulement peut absorber une force orientée vers le haut agissant sur l'arbre d'entraînement dans sa direction longitudinale, et
- le logement dans lesdits au moins deux roulements, qui est réalisé de manière telle qu'il peut absorber une force orientée vers le haut agissant sur l'arbre d'entraînement dans sa direction longitudinale, est réalisé de manière telle qu'il peut absorber des forces orientées vers le haut agissant sur l'arbre d'entraînement dans sa direction longitudinale qui sont ≥ 50 kN.

2. Procédé selon la revendication 1, **caractérisé en ce que** le poids de la masse totale de l'arbre d'entraînement et de tous les modules qui tournent conjointement avec celui-ci, fixés sur celui-ci, est ≥ 3 kN.

3. Procédé selon la revendication 1 ou 2, **caractérisé en ce que** le poids de la masse totale de l'arbre d'entraînement et de tous les modules qui tournent conjointement avec celui-ci, fixés sur celui-ci, est ≤ 50 kN.

4. Procédé selon l'une quelconque des revendications 1 à 3, **caractérisé en ce que** l'angle α n'est pas supérieur à 20°.

5. Procédé selon l'une quelconque des revendications 1 à 4, **caractérisé en ce que** l'angle ß n'est pas supérieur à 10°.

6. Procédé selon l'une quelconque des revendications 1 à 5, **caractérisé en ce que** la différence entre la température T^{SCH} de la masse fondue de lavage et la température T^{SP} de la suspension introduite dans l'espace de procédé est 1 à 25°C.

7. Procédé selon l'une quelconque des revendications 1 à 6, **caractérisé en ce que** le joint est un joint d'étanchéité rotatif axial à double action.

8. Procédé selon l'une quelconque des revendications 1 à 7, **caractérisé en ce que** l'arbre d'entraînement et le dispositif d'évacuation sont fabriqués en des matériaux dont la densité à 25°C et à 1 atm est ≥ 3 g/cm³ et ≤ 18 g/cm³.

9. Procédé selon l'une quelconque des revendications 1 à 8, **caractérisé en ce que** la densité des cristaux fondus dans l'espace de fusion des cristaux ainsi que celle de la lessive-mère et de la suspension de cristaux dans l'espace de procédé est ≤ 1,5 g/cm³ et ≥ 0, 7 g/cm³.

10. Procédé selon l'une quelconque des revendications 1 à 9, **caractérisé en ce que** le rapport d'ouverture du dispositif d'évacuation est ≥ 0,05 et < 1.

11. Procédé selon l'une quelconque des revendications 1 à 10, **caractérisé en ce que** le dispositif d'évacuation présente, sur sa face orientée vers le lit de cristaux, au moins un couteau d'évacuation, la surface du couteau d'évacuation et l'axe de rotation de l'arbre d'entraînement formant un angle aigu y.

12. Procédé selon la revendication 11, **caractérisé en ce que** le dispositif d'évacuation est un disque présentant des ouvertures de passage, chaque ouverture de passage étant équipée d'un couteau d'évacuation.

13. Procédé selon l'une quelconque des revendications 1 à 12, **caractérisé en ce que** le diamètre maximal de l'arbre d'entraînement, dans sa section longitudinale située entre le dispositif d'évacuation et le roulement dans lequel le logement est réalisé de manière telle qu'il absorbe la force orientée vers le bas agissant sur l'arbre d'entraînement dans sa direction longitudinale, vaut 50 mm à 400 mm.

14. Procédé selon l'une quelconque des revendications 1 à 13, **caractérisé en ce que** la teneur en composé cible chimique de la suspension acheminée dans l'espace de procédé est ≤ 70% en poids.

15. Procédé selon l'une quelconque des revendications 1 à 14, **caractérisé en ce que** le degré de cristallisation de la suspension acheminée dans l'espace de procédé vaut 0,10 à 0,60.

16. Procédé selon l'une quelconque des revendications 1 à 15, **caractérisé en ce que** le composé cible chimique est un composé du groupe constitué par l'acide acrylique, l'acide méthacrylique, la N-vinylpyrrolidone et le p-xylène.

17. Procédé selon l'une quelconque des revendications 1 à 16, **caractérisé en ce que** le composé cible chimique est l'acide acrylique et la suspension alimentée dans l'espace de procédé contient ≥ 65% en poids d'acide acrylique et 0,1 à 30% en poids d'eau.

18. Procédé selon l'une quelconque des revendications 1 à 17, **caractérisé en ce que** le logement dans lesdits au moins deux roulements, qui est réalisé de manière telle qu'il absorbe la force orientée vers le bas agissant sur l'arbre d'entraînement dans sa direction longitudinale, est réalisé de manière telle qu'il peut absorber des forces orientées vers le bas qui agissent sur l'arbre d'entraînement dans sa direction longitudinale qui sont ≥ 50 kN.

19. Procédé selon l'une quelconque des revendications 1 à 18, **caractérisé en ce que** l'arbre d'entraînement est logé de manière à pouvoir tourner dans au moins deux roulements, le logement dans un premier roulement étant réalisé comme logement de guidage, qui absorbe la force orientée vers le bas agissant sur l'arbre d'entraînement dans sa direction longitudinale ainsi que les forces agissant radialement vers l'extérieur dans le premier roulement à partir de l'arbre d'entraînement ainsi qu'en plus une force orientée vers le haut agissant sur les arbres d'entraînement dans leur direction longitudinale, et dans un deuxième roulement comme logement radial qui n'absorbe que les forces agissant dans ce deuxième roulement radialement vers l'extérieur à partir de l'arbre d'entraînement.

20. Procédé selon l'une quelconque des revendications 1 à 18, **caractérisé en ce que** l'arbre d'entraînement est logé de manière à pouvoir tourner dans au moins trois roulements, le logement dans un premier roulement étant réalisé sous forme de logement d'appui qui absorbe la force orientée vers le bas agissant sur l'arbre d'entraînement dans sa direction longitudinale ainsi que les forces agissant radialement vers l'extérieur dans le premier roulement à partir de l'arbre d'entraînement, dans un deuxième roulement également comme logement d'appui, qui absorbe les forces agissant radialement vers l'extérieur dans le deuxième roulement à partir de l'arbre d'entraînement ainsi qu'une force orientée vers le haut agissant sur l'arbre d'entraînement dans son sens longitudinal et, dans un troisième roulement, comme logement radial qui n'absorbe que les forces agissant radialement vers l'extérieur dans ce troisième roulement à partir de l'arbre d'entraînement.
